# EUROPEAN PATENT APPLICATION

(11) **EP 1 500 524 A2**
(43) Date of publication of application: **26.01.2005**
(21) Application number: 04017197.7
(22) Date of filing: 21.07.2004
(51) Int. Cl.: B60B 27/00

(54) **Wheel support bearing assembly**

(30) Priority: 25.07.2003 JP 2003280447; 29.08.2003 JP 2003307516; 15.10.2003 JP 2003355687; 15.10.2003 JP 2003355705; 17.10.2003 JP 2003357305
(71) Applicant: NTN CORPORATION, Osaka-shi Osaka 550-0003 (JP)
(72) Inventor: Niwa, Tsuyoshi, Iwata-shi Shizuoka 438-0037 (JP); Suzuki, Shougo, Iwata-shi Shizuoka 438-0037 (JP); Asai, Takayuki, Iwata-shi Shizuoka 438-0037 (JP); Ohtsuki, Hisashi, Iwata-shi Shizuoka 438-0037 (JP); Takubo, Takayasu, Iwata-shi Shizuoka 438-0037 (JP)
(74) Representative: Gassner, Wolfgang, Dr.

(57) **Abstract**

To reduce the weight of the wheel support bearing assembly without sacrificing the strength, the wheel support bearing assembly for rotatably supporting a vehicle wheel relative to a vehicle body structure includes a hub axle (2) formed with a radially outwardly extending hub flange (12). This hub flange (12) has an inner peripheral portion and a remaining wall portion other than the inner peripheral portion, and the remaining wall portion thereof is constituted by a plurality of radially outwardly extending ribs (13) each formed with a bolt insertion hole (14). The hub axle (2) also includes a brake pilot area (16) extending outwardly from an outboard face of the hub flange (12) for guiding an inner peripheral surface of the brake rotor (41). At least the root diameter (D1) of at least an inboard face of each rib (13) is chosen to be equal to or smaller than the outer diameter (D2) of the brake pilot area (16).

## Description

### BACKGROUND OF THE INVENTION

### (Field of the Invention)

The present invention relates to a wheel support bearing assembly for use in automotive vehicles.

### (Description of the Prior Art)

As is well known to those skilled in the art, the need to reduce the weight of component parts of automotive vehicles has now been pressing in order to improve the mileage, and this is particularly true of wheel support bearing assemblies employed in the automotive vehicles.

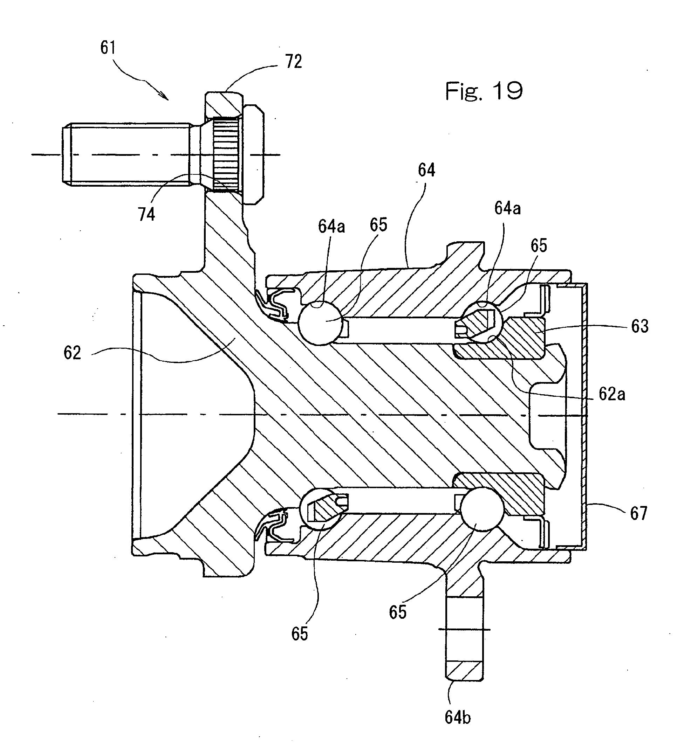

The wheel support bearing assembly of a hub unit type is well known in the art, which is a combined hub and bearing assembly including a wheel support bearing concurrently serving as a wheel hub. The wheel support bearing assembly of a hub unit type currently utilized in association with automotive vehicle wheels is shown in Fig. 19 and includes a hub axle 62 having an outboard end formed with a radially outwardly extending hub flange 72 for the support of a corresponding vehicle wheel and also having a circumferentially extending annular inner raceway 62a defined on an outer peripheral surface of the hub axle 62 adjacent the hub flange 72. This wheel support bearing assembly of the hub unit type also includes a generally cylindrical inner race segment 63 fixedly mounted on the opposite, inboard end of the hub axle 62 and having a circumferentially extending annular inner raceway 62a defined on the outer peripheral surface of the hub axle 62 adjacent the inboard end thereof, and an outer race member 64 positioned around the hub axle 62 with an annular bearing gap defined between it and the hub axle 62 and having an inner peripheral surface formed with circumferentially extending annular outer raceways 64a that are radially aligned with the annular inner raceways 62a. A plurality of, for example, two, rows of bearing balls 65 are rollingly interposed within the annular bearing gap between the hub axle 62 and the outer race member 64 and received in part in the annular inner raceways 62a and in part in the annular outer raceways 64a. The outer race member 64 also has a vehicle body fixture 64b through which the outer race member 64 and, hence, the bearing assembly can be secured to a vehicle body structure (not shown).

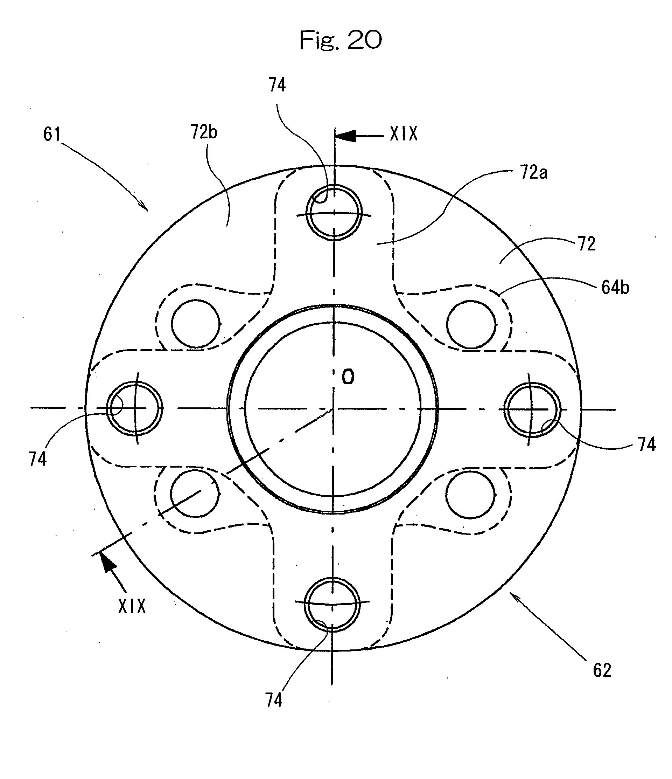

The wheel mounting hub flange 72 integral or rigid with the hub axle 62 is of a substantially round shape as shown in Fig. 20 and has a circular row of bolt insertion holes 74 defined therein for passage therethrough of corresponding bolts that are used to secure the associated vehicle wheel to the hub flange 72. This hub flange 72 is of a design in which only portions thereof around the bolt insertion holes 74 are formed as respective ribbed portions 72a of a wall thickness greater than that of the remaining non-ribbed portions 72b of the hub flange 72, to thereby accomplish reduction in weight of the wheel support bearing assembly.

Similar wheel bearing assemblies are also currently known in the art, in which the bolt insertion holes are formed in the hub flange of a uniform wall thickness and in which an outer peripheral portion of the hub flange is discretely cut out or otherwise depleted.

However, with the wheel support bearing assembly in which the wheel mounting hub flange 72 integral or rigid with the hub axle 62 has the substantially round shape as discussed above, it has been found that when the wheel support bearing assembly is to be bolted to the vehicle body structure through the vehicle body fixture 64b, the bolt fastening work cannot be performed smoothly and efficiently as the presence of the hub flange 72 in the path of access of a bolt fastening tool interferes with such bolt fastening tool. Also, in view of the fact that the hub flange 72 is formed to the substantially round shape, the hub axle 62 tends to become bulky in size and, even though the remaining non-ribbed portions 72b of the hub flange 72 are each tailored to have a relatively reduced wall thickness, reduction in weight of the wheel support bearing assembly as a whole is not still satisfactory.

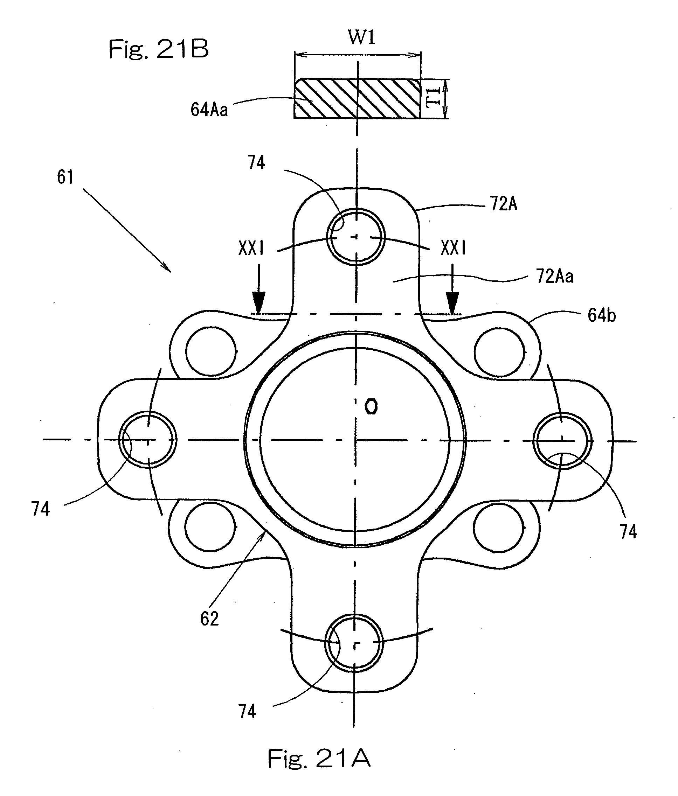

In order to alleviate the foregoing inconveniences encountered during the bolt fastening work, the Japanese Laid-open Patent Publication No. 2003-94905, for example, discloses the use of a plurality of circumferentially spaced radial flanges 72A protruding radially outwardly from the hub axle, with a bolt insertion hole 74 defined in a free end of each of the radial flanges 72A as shown in Fig. 21A, to thereby reduce the weight of the wheel support bearing assembly as a whole and also to facilitate the mounting of the wheel support bearing assembly to the vehicle body structure. The radial flanges 72A referred to above may be considered left by depleting the non-ribbed portions 72b of the hub flange 72 shown in Fig. 20.

However, the wheel support bearing assembly disclosed in the above mentioned publication has been found that the are of portions to be depleted is still insufficient and, therefore, there is still plenty of scope for weight reduction.

Also, the wheel support bearing assembly disclosed in the above mentioned publication is of a design in which a wheel pilot portion and a brake pilot portion are continued over the entire circumference and, therefore, there is still plenty of scope for weight reduction.

The brake pilot portion referred to above is represented by a cylindrical portion protruding outwardly from an outboard end face of the hub axle, whereas the wheel pilot portion referred to above is represented by a cylindrical portion protruding outwardly from the brake pilot portion and having a diameter somewhat smaller than that of the brake pilot portion. If each of the cylindrical portions representing the wheel pilot portion and the brake pilot portion are divided into a plurality of projections spaced from each other in a direction circumferentially thereof, the weight of the wheel support bearing assembly as a whole appears to be further reduced.

A different version of the wheel support bearing assembly of the type suggested in the above mentioned publication is also known in the art, in which the ratio between the width W1 of each of the radial projections 72A, as measured at a root portion 72Aa thereof adjacent the hub axle in a direction conforming to the direction of rotation of the hub axle as shown in Fig. 21B, and the thickness T1 of that root portion 72Aa of each radial projection 72A is chosen to be about 5:1 for the purpose of securing the flange strength and the rigidity of each radial projection 72A.

In order to achieve the intended weight reduction, although reduction of the flange mass in the hub axle 62 appears to be most effective, such reduction tends to bring about the contrary result in that the mass must be increased to secure the flange strength effective to withstand the moment load transmitted from the associated wheel tire.

In the conventional wheel support bearing assemblies including that shown in and described with reference to Figs. 21A and 21B, the width W1 and the thickness T1, as measured in a direction conforming to the circumference of the wheel mounting hub flange and in a direction conforming to the axis of the hub axle, respectively, the flange diameter as measured at the root of the hub flange adjacent the hub axle and other parameters are appropriately controlled and adjusted so that the weight reduction can be achieved while the strength and the rigidity are secured.

However, the finite element analysis (FEM analysis) and a series of experiments conducted by the inventors of the present invention have revealed that such control and adjustment of those parameters, although effective to achieve about 10% weight reduction particularly in the case of the wheel support bearing assembly of a type utilizing the hub flange having the ribbed and non-ribbed portions as shown in Fig. 20, are ineffective to achieve further weight reduction because of the strength and the rigidity.

The wheel support bearing assembly suggested in the above mentioned publication is, when in use, supported by the vehicle body structure with the outer race rigidly connected to an automotive wheel suspension system and, on the other hand, the vehicle wheel is coupled with the hub axle for rotation together therewith by means of a plurality of hub bolts, which have been press-fitted into bolt insertion holes defined in the hub flange and which are passed through the respective bolt insertion holes in the vehicle wheel with nuts firmly fastened thereto. As a material for the hub axle, carbon steel is generally used and, therefore, in order to achieve the reduction of the weight of the wheel support bearing assembly as a whole, the hub flange integral or rigid with the hub axle is so designed and so tailored to have such a longitudinal sectional shape of a gradient that the thickness thereof progressively decreases in a direction radially outwardly from a position adjacent to the hub axle towards the position where each of the bolt insertion holes is defined.

Where the wheel mounting hub flange is so designed and so tailored to have such longitudinal sectional shape as discussed above, in order to lessen concentration of stresses on the hub flange by avoiding an abrupt change in wall thickness, the hub flange must be of such a shape that the gradient referred to above is loosened to allow the surface of that gradient and a flat surface of a portion of the hub flange adjacent each of the bolt insertion holes (i.e., adjacent each of the portions where the respective hub bolts are fitted) to be connected together by means of a connecting arcuate surface of an arcuate section having a relatively large radius of curvature. For this reason, reduction in wall thickness of those portions of the hub flange adjacent the bolt insertion holes is limited and, therefore, no sufficient weight reduction can be achieved.

In addition, in order for the hub axle to have a fatigue strength sufficient to withstand against the stress setup resulting from reduction in wall thickness of those portions of the hub flange adjacent the bolt insertion holes, it may be contemplated to harden the entire surface of the hub flange opposite to the surface thereof, onto which the vehicle wheel is fitted, by the use of an induction hardening technique. However, in such case, an additional problem has been found in that since serrations of each of the hub bolts do not sufficiently and effectively engage in the hub axle, failing to secure the connectivity. In other words, no idle torque of each of the hub bolts can be obtained sufficiently and, therefore, each hub bolt tends to rotate idle.

### SUMMARY OF THE INVENTION

In view of the foregoing, the present invention has for its object to reduce the weight of the wheel support bearing assembly while the strength and the lifetime of that wheel support bearing assembly are secured.

In order to accomplish the foregoing object, the first aspect of the present invention provides a wheel support bearing assembly for rotatably supporting a vehicle wheel relative to a vehicle body structure, which includes an outer member having an inner peripheral surface formed with a plurality of first raceways, an inner member positioned radially inwardly of the outer member, and having an outer peripheral surface formed with a corresponding number of second raceways defined therein in alignment with the first raceways in the outer member, and also having inboard and outboard end portions opposite to each other, with a wheel mounting hub flange formed in the outboard end portion so as to extend radially outwardly therefrom, and rows of rolling elements rollingly accommodated within the annular bearing space and received in part within the first raceways and in part within the second raceways.

The wheel mounting hub flange referred to above has an inner peripheral wall portion and a remaining wall portion other than the inner peripheral portion, while the remaining wall portion is constituted by a plurality of radially outwardly extending ribs each formed with a bolt insertion hole defined therein, and also has inboard and outboard surfaces opposite to each other. Also, the inner member has a brake pilot area extending in an outboard direction from the hub flange for guiding an inner peripheral surface of a brake rotor, in which a root diameter of each of the ribs as measured at the inboard surface thereof is chosen to be equal to or smaller than an outer diameter of the brake pilot area.

According to the first aspect of the present invention, since the hub flange of the inner member is constituted by the plural radially outwardly extending ribs each formed with the bolt insertion hole defined therein, unnecessary portions of the hub flange which do not adversely affect the strength thereof can be eliminated, resulting in reduction in weight of the wheel support bearing assembly. In such case, the inner peripheral portion of the hub flange is left as that in a ring shape, selection of the root diameter of each of the ribs as measured at the inboard surface thereof to be equal to or smaller than the outer diameter of the brake pilot area contributes to elimination of a substantial number of those unnecessary portions of the hub flange to achieve the intended weight reduction.

The present invention embodied in the wheel support bearing assembly according to the first aspect thereof can be applied to any bearing assembly of any generation type, regardless of whether it be of a second, third and fourth generation type, but the wheel support bearing assembly can be configured to represent the third generation type. In this third generation type, the inner member includes a hub axle having the wheel mounting flange formed on the outboard end portion of the hub axle so as to extend radially outwardly from an outer peripheral surface thereof, and an inner race segment fixedly mounted on the inboard end portion of the hub axle, and the second raceways are formed in the hub axle and the inner race segment, respectively, and the hub axle has the brake pilot area defined therein.

The wheel support bearing assembly in which the inner race segment is used on the inboard end portion of the hub axle with one of the second raceways formed in the hub axle as described above can be reduced easily in weight and assembled compact as compared with the wheel support bearing assembly in which the inner member is constituted by a plurality of inner race segments and a hub axle. Application of the present invention to this type of the wheel support bearing assembly will be a sophisticated version having its weight reduced considerably and also having a compact structure.

In the wheel support bearing assembly according to the first aspect of the present invention, the brake pilot area may be continued over an entire circumference thereof, in which case a root diameter of each of the ribs as measured at the outboard surface thereof being chosen to be equal to or greater than the outer diameter of the brake pilot area.

If the brake pilot area were to be divided into a plurality of segments in a direction circumferentially thereof, a radial gap of the brake rotor relative to the brake pilot area would be uneven depending on the circumferential position and eccentricity would occur in mounting of the brake rotor, eventually resulting in braking vibration. Because of this, such division of the brake pilot area will require the brake pilot area to have a highly precisely machined outer peripheral surface.

However, the brake pilot area is continued over the entire circumference thereof, i.e., has a continuous outer peripheral surface as described hereinabove, the risk of the brake rotor being eccentrically mounted can advantageously be eliminated and the high precision machining is no longer necessary, resulting in reduction in manufacturing cost to achieve a low cost feature. When in the case where the brake pilot area is continued over the entire circumference thereof, selection of the root diameter of each of the ribs as measured at the outboard surface thereof being equal to or greater than the outer diameter of the brake pilot area is effective to provide continuity in appearance between the ribs and the brake pilot area and, therefore, a sufficient strength can be secured even with an automotive vehicle having a substantial weight. Accordingly, the weight reduction can be expected while the strength is secured sufficiently.

In the wheel support bearing assembly according to the first aspect of the present invention, the inner member may also have a wheel pilot area extending outwardly from the brake pilot area in an outboard direction for guiding an inner peripheral surface of the automotive wheel, in which case the brake pilot area is in the form of a ring continued over an entire circumference thereof and the wheel pilot area is divided into a plurality of circumferentially spaced wheel pilot segments.

In order to eliminate a high precision machining which would otherwise be required to eliminate eccentricity during mounting of the brake rotor, it is preferred that the brake pilot area is continued over the entire circumference thereof as described above. However, since the automotive wheel is fixed to the ribs by means of bolts, the wheel pilot area merely serves to guide the automotive wheel during the mounting thereof and will have no concern with the problem associated with eccentricity in mounting of the automotive wheel. Accordingly, the use of the wheel pilot area of a design divided into the circumferentially spaced wheel pilot segments, not being continued over the entire circumference thereof, is effective to achieve a further weight reduction without affecting the functionality in any way whatsoever.

In the wheel support bearing assembly according to the first aspect of the present invention, the width of a root portion of each of the ribs of the hub flange as measured in a direction conforming to a direction of rotation of the inner member is preferably chosen to be equal to or smaller than the width of an end portion of each of the ribs, where the corresponding bolt insertion hole is formed, as measured in a direction conforming to the direction of rotation of the inner member.

In terms of strength, each of the ribs referred to above is preferably of a design including a base portion of a thickness greater than that of a free end portion thereof. However, that end portion of each rib where the corresponding bolt insertion hole is formed is required to have the width increased so that the bolt insertion hole can be formed. In view of this, selection of the width of a root portion of each rib of the hub flange, as measured in a direction conforming to a direction of rotation of the inner member, which is equal to or smaller than the width of the free end portion of each rib, as measured in a direction conforming to the direction of rotation of the inner member, is effective to secure a sufficient rigidity and a sufficient strength required in the root portion, making it possible to achieve a further weight reduction.

In the wheel support bearing assembly according to the first aspect of the present invention, a protective cover may be employed, which includes a seal contact area, mounted on a portion of an hub axle between the hub flange on the hub axle and the second raceway, and a covering area extending from the seal contact area and covering a depleted space delimited between the neighboring ribs, and also includes a contact type seal member mounted on the outer member and having at least one elastic sealing lip slidingly engaged with the protective cover.

The use of the protective cover is effective to avoid an undesirable ingress of water from the outboard side, which would result from due to the particular shape of the hub flange in which the plural ribs extend radially outwardly. Also, since the protective cover concurrently serves as a seal contact area which the seal member slidingly engages, the use of the protective cover does in no way provide an obstruction to the weight reduction.

In the wheel support bearing assembly according to the first aspect of the present invention, the brake rotor referred to above may be a brake drum of the drum brake. Where the brake drum is employed, the brake pilot area is preferably of a type continued over the entire circumference thereof as described hereinbefore.

The brake rotor referred to above is a member rotatable together with the automotive wheel and capable of generating a frictional force used to brake the automotive wheel and is generally available in two types, i.e., a brake drum of a drum brake and a brake disc of a disc brake. In the case of the brake drum, if the brake pilot area is of a divided type, there is not only a possibility of eccentricity occurring in the manner described above, but also a possibility of foreign matter entering into the brake drum. However, the use of the brake pilot area that is continued over the entire circumference thereof is effective to eliminate the above discussed problems associated with eccentricity and ingress of foreign matter.

The second aspect of the present invention provides a wheel support bearing assembly for rotatably supporting a vehicle wheel relative to a vehicle body structure, which includes an outer member having an inner peripheral surface formed with a plurality of first raceways, an inner member including a hub axle having outboard and inboard end portions opposite to each other and also having a wheel mounting flange formed on the outboard end portion thereof so as to extend radially outwardly from an outer peripheral surface thereof and an inner race segment fixedly mounted on the inboard end portion of the hub axle, and positioned radially inwardly of the outer member, and also having an outer peripheral surface formed with a corresponding number of second raceways defined therein in alignment with the first raceways in the outer member, and rows of rolling elements rollingly accommodated within the annular bearing space and received in part within the first raceways and in part within the second raceways. The hub axle has a brake pilot area extending in an outboard direction from the hub flange for guiding an inner peripheral surface of a brake rotor and a wheel pilot area extending further outwardly from the brake pilot area in the outboard direction for guiding the inner peripheral surface of the automotive wheel. At least the wheel pilot area is divided into a plurality of circumferentially spaced wheel pilot segments.

According to the second aspect of the present invention, since the wheel pilot area is divided into a plurality of circumferentially spaced wheel pilot segments, the weight reduction can be expected. The wheel pilot area merely serves to guide the automotive wheel during the mounting thereof and will have no concern with the problem associated with eccentricity in mounting of the automotive wheel. Accordingly, the use of the wheel pilot area of a design divided into the circumferentially spaced wheel pilot segments, not being continued over the entire circumference thereof, is effective to achieve a further weight reduction without affecting the functionality in any way whatsoever.

It is to be noted that the brake rotor referred to above is a member rotatable together with the automotive wheel and capable of generating a frictional force used to brake the automotive wheel and is generally available in two types, i.e., a brake drum of a drum brake and a brake disc of a disc brake.

In the wheel support bearing assembly according to the second aspect of the present invention, the brake pilot area may be in the form of a ring continued over an entire circumference thereof.

If the brake pilot area is divided, the outer peripheral surface of the brake pilot area would be required to be machined with high precision in order to eliminate a brake vibration resulting from eccentricity that occurs when the brake rotor is mounted onto the brake pilot area. However, the use of the brake pilot area of a type continued over the entire circumference thereof makes it possible an radial gap between the brake rotor and the brake pilot area to be uniform regardless of the position in the circumference and, therefore, no highly precise machining is necessary, resulting in reduction in manufacturing cost.

In the wheel support bearing assembly according to the second aspect of the present invention, the wheel mounting hub flange referred to above may have an inner peripheral wall portion and a remaining wall portion other than the inner peripheral portion, with the remaining wall portion being constituted by a plurality of radially outwardly extending ribs each formed with a bolt insertion hole defined therein. In such case, since the hub flange of the inner member is constituted by the radially outwardly extending ribs each having a free end portion formed with the corresponding bolt insertion hole, unnecessary portion of the wheel mounting hub flange which do not adversely affect the strength thereof can be minimized to thereby achieve the weight reduction.

Also, in the wheel support bearing assembly according to the second aspect of the present invention, the width of a root portion of each of the ribs of the hub flange as measured in a direction conforming to a direction of rotation of the inner member is chosen to be equal to or smaller than the width of an end portion of each of the ribs, where the corresponding bolt insertion hole is formed, as measured in a direction conforming to the direction of rotation of the inner member.

In terms of strength, each of the ribs referred to above is preferably of a design including a base portion of a thickness greater than that of a free end portion thereof. However, that end portion of each rib where the corresponding bolt insertion hole is formed is required to have the width increased so that the bolt insertion hole can be formed. In view of this, selection of the width of a root portion of each rib of the hub flange as measured in a direction conforming to a direction of rotation of the inner member, which is equal to or smaller than the width of the free end portion of each rib as measured in a direction conforming to the direction of rotation of the inner member, is effective to secure a sufficient rigidity and a sufficient strength required in the root portion, making it possible to achieve a further weight reduction.

Also, the wheel support bearing assembly according to the second aspect of the present invention, a protective cover may be employed, which include a seal contact area, mounted on a portion of an hub axle between the hub flange on the hub axle and the second raceway, and a covering area extending from the seal contact area and covering a depleted space delimited between the neighboring ribs, and a contact type seal member mounted on the outer member and having at least one elastic sealing lip slidingly engaged with the protective cover.

The use of the protective cover is effective to avoid an undesirable ingress of water from the outboard side, which would result from due to the particular shape of the hub flange in which the plural ribs extend radially outwardly. Also, since the protective cover concurrently serves as a seal contact area which the seal member slidingly engage, the use of the protective cover does in no way provide an obstruction to the weight reduction.

The brake rotor according to the second aspect of the present invention may be a brake drum of the drum brake.

In the case where the brake rotor is in the form of the brake drum, if the brake pilot area is of a divided type, there is not only a possibility of eccentricity occurring in the manner described above, but also a possibility of foreign matter entering into the brake drum. However, the use of the brake pilot area that is continued over the entire circumference thereof is effective to eliminate not only the problem associated in the ingress of foreign matter, but also the need to use a protective cover hitherto required, resulting in reduction in manufacturing cost.

Furthermore, in the wheel support bearing assembly according to the second aspect of the present invention, the outer member may have inboard and outboard end portions opposite to each other and, also, its outer peripheral surface formed with a fixing flange, in which case the inboard end portion of the outer member including a knuckle pilot area is engageable with an inner peripheral surface of a knuckle. The knuckle pilot area referred to above is preferably divided into a plurality of circumferentially spaced knuckle pilot segments.

When the knuckle pilot area is of a design divided in to the circumferentially spaced knuckle pilot segments as described above, the knuckle pilot area can have a reduced weight and, accordingly, the weight of the wheel support bearing assembly as a whole can be further reduced advantageously.

In accordance with the third aspect of the present invention, which is an alternative of the wheel support bearing assembly according to the second aspect thereof, there is provided a wheel support bearing assembly for rotatably supporting a vehicle wheel relative to a vehicle body structure, which includes an outer member having an inner peripheral surface formed with a plurality of first raceways; an inner member positioned radially inwardly of the outer member, and having an outer peripheral surface formed with a corresponding number of second raceways defined therein in alignment with the first raceways in the outer member and also having inboard and outboard end portions opposite to each other, and a first flange for supporting the automotive wheel, that is formed in the outboard end portion so as to extend radially outwardly therefrom; and rows of rolling elements rollingly accommodated within the annular bearing space and received in part within the first raceways and in part within the second raceways. The outer member referred to above includes a second flange formed on an outer peripheral surface thereof and has its inboard end portion including a knuckle pilot area engageable with an inner peripheral surface of a knuckle and divided into a plurality of circumferentially spaced knuckle pilot segments.

According to the third aspect of the present invention, since the knuckle pilot area is constituted by a plurality of circumferentially spaced knuckle pilot segments, the weight of the knuckle pilot area can advantageously be reduced and the weight of the wheel support bearing assembly as a whole can thus be reduced.

In this wheel support bearing assembly according to the third aspect of the present invention, if the outer member referred to above includes a fixing flange, the fixing flange may be divided into a plurality of circumferentially spaced fixing flange segments with the knuckle pilot area protruding outwardly from inboard surfaces of the fixing flange segments. In such case, the knuckle pilot segments referred to above may be provided in corresponding circumferential portions where the fixing flange segments are provided. Each of the fixing flange segments is then formed with a bolt insertion hole for passage a corresponding knuckle bolt therethrough or a female threads for receiving such knuckle bolt.

The fourth aspect of the present invention provides a wheel support bearing assembly for rotatably supporting a vehicle wheel relative to a vehicle body structure, which includes an outer member having an inner peripheral surface formed with a plurality of first raceways; an inner member including a hub axle having outboard and inboard end portions opposite to each other and also having a wheel mounting flange formed on the outboard end portion thereof so as to extend radially outwardly from an outer peripheral surface thereof and an inner race segment fixedly mounted on the inboard end portion of the hub axle, which inner member is positioned radially inwardly of the outer member, and also having an outer peripheral surface formed with a corresponding number of second raceways defined therein in alignment with the first raceways in the outer member; and rows of rolling elements rollingly accommodated within the annular bearing space and received in part within the first raceways and in part within the second raceways. The hub flange referred to above is constituted by a plurality of radially outwardly extending ribs each being formed with a bolt insertion hole defined therein and having inboard and outboard surfaces opposite to each other. The root thickness of a root portion of each of the ribs of the hub flange as measured in a direction axially of the inner member is chosen to be equal to or greater than a thickness of the root portion of each rib as measured in a direction conforming to a direction of rotation of the inner member.

The hub flange employed in the wheel support bearing assembly according to the fourth aspect of the present invention may be of a design either constituted in its entirety by the plural ribs referred to above or in which an inner peripheral portion of the hub flange represents a round shape and the plural ribs referred to above extend outwardly from the round inner peripheral portion of the hub flange.

In general, since in the wheel support bearing assembly, the moment load transmitted from the automotive wheel tire acts on the root portions of the hub flange mainly in a direction axially thereof, the thickness of each root portion of the hub flange as measured in a direction conforming to the direction of rotation of the hub axle may be of a value sufficient to withstand the load generated by the braking force. Because of this, where the hub flange is constituted by the radially outwardly extending ribs as hereinabove described in accordance with the fourth aspect of the present invention, selection of the axial thickness of the root portion of each of the ribs to be equal to or greater than the thickness of the root portion of each rib as measured in the cross-sectional shape in a direction conforming to the direction of rotation of the hub axle is effective to minimize the cross-sectional surface area of each rib and, at the same time, to secure sufficient strength and rigidity, eventually resulting in weight reduction.

In the wheel support bearing assembly according to the fourth aspect of the present invention, where the hub axle employed therein includes a brake pilot area extending outwardly from the hub flange in an outboard direction for guiding an inner peripheral surface of the brake rotor, the root diameter of the root portion of each of the ribs of the hub flange may be chosen to be smaller than the diameter of the brake pilot area.

Selection of the root diameter of each rib of the hub flange to be smaller than the diameter of the brake pilot area minimizes or eliminates a round portion of the inner periphery of the hub flange, resulting in the weight being reduced. On the contrary, the brake pilot area extends axially from the ribs with the strength and the rigidity reduced consequently. However, selection of the axial thickness of the root portion of each rib as measured in a direction axially of the hub axle to be equal to or greater than the thickness thereof as measured in a direction conforming to the direction of rotation of the hub axle such as achieved in the present invention, is effective to secure a sufficient strength and a sufficient rigidity, even though the root diameter of each rib is smaller than the diameter of the brake pilot area.

Also, in the wheel support bearing assembly according to the fourth aspect of the present invention, the thickness of the root portion of each of the ribs of the hub flange as measured in that direction conforming to the direction of rotation of the inner member may be chosen to be smaller than a width of a portion of each of the ribs where the corresponding bolt insertion hole is formed, as measured in that direction conforming to the direction of rotation of the inner member.

In terms of strength, each of the ribs referred to above is preferably of a design including a base portion of a thickness greater than that of a free end portion thereof. However, that end portion of each rib where the corresponding bolt insertion hole is formed is required to have the width increased so that the bolt insertion hole can be formed. In view of this, selection of the thickness of that root portion of each rib of the hub flange, as measured in a direction conforming to a direction of rotation of the inner member, to be smaller than the width of the portion of each of the ribs where the corresponding bolt insertion hole is formed, as measured in that direction conforming to the direction of rotation of the inner member, is effective to secure a sufficient rigidity and a sufficient strength required in the root portion, making it possible to achieve a further weight reduction.

Also, in the wheel support bearing assembly according to the fourth aspect of the present invention, a protective cover may be employed, which includes a seal contact area, mounted on a portion of an hub axle between the hub flange on the hub axle and the second raceway, and a covering area extending from the seal contact area and covering a depleted space delimited between the neighboring ribs, in combination with a contact type seal member mounted on the outer member and having at least one elastic sealing lip slidingly engaged with the protective cover.

The use of the protective cover is effective to avoid an undesirable ingress of water from the outboard side, which would result from due to the particular shape of the hub flange in which the plural ribs extend radially outwardly. Also, since the protective cover concurrently serves as a seal contact area which the seal member slidingly engage, the use of the protective cover does in no way provide an obstruction to the weight reduction.

The fifth aspect of the present invention provides a wheel support bearing assembly for rotatably supporting a vehicle wheel relative to a vehicle body structure, which includes an outer member having an inner peripheral surface formed with a plurality of first raceways; an inner member including a hub axle having outboard and inboard end portions opposite to each other and also having a wheel mounting flange formed on the outboard end portion thereof so as to extend radially outwardly from an outer peripheral surface thereof and an inner race segment fixedly mounted on the inboard end portion of the hub axle, which inner member is positioned radially inwardly of the outer member, and also has an outer peripheral surface formed with a corresponding number of second raceways defined therein in alignment with the first raceways in the outer member; and rows of rolling elements rollingly accommodated within the annular bearing space and received in part within the first raceways and in part within the second raceways. The longitudinal sectional shape of a region ranging from a thick walled base portion of the hub flange to a hub bolt mounting portion adjacent an outer periphery of the hub axle is so chosen that an inboard side face is inclined to render a wall thickness at an outer peripheral portion to be smaller than that at a center portion. The gradient shape of the inboard side face is in a form of a two-stage gradient shape made up of a first gradient surface area adjacent the center and a second gradient surface area adjacent the outer periphery, that is inclined at an angle smaller than that of inclination of the first gradient surface area, which is connected with the first gradient surface area by means of a connecting arcuate transit surface area.

The connecting transit arcuate surface area in the inboard side surface is a surface which has been hardened by an induction hardening process. The region of the connecting transit arcuate surface area, where the hardening process is applied to form the hardened surface may extend from the connecting transit arcuate surface area to any other surface area, but the outer peripheral edge of the region in which the hardening process is applied preferably lies at a position radially inwardly of the hub bolt mounting portion.

According to this fifth aspect of the present invention, the inboard side face of the hub flange is so shaped as to represent the two-stage gradient profile in which the first gradient surface area adjacent the center and the second gradient surface area adjacent the outer periphery and connected with the first gradient surface by means of an arcuate transit surface area. Accordingly, even though the wall thickness of the hub bolt mounting portion is reduced, the wall thickness at the boundary between the thick walled base portion and the hub bolt mounting portion does not change abruptly and the stress concentration on that boundary can advantageously relieved. In view of this, the wall thickness of the hub bolt mounting portion 13b can advantageously be reduced.

Although the connecting arcuate surface area provides the site at which stresses acting on the hub bolt mounting portion can be dispersed, at least the connecting arcuate surface area in the inboard face of the hub flange is heat treated by the induction hardening process to provide the hardened surface region and, accordingly, the fatigue strength at this portion can be increased to increase the durability. Therefore, with the wheel support bearing assembly of the structure described above, not only can the fatigue strength of the hub axle be maintained and increased, but the weight reduction can also be achieved.

The surface region of the surface where the hardening is effected preferably ranges from the first gradient surface area adjacent the center to the second gradient surface adjacent the outer periphery forming the two-stage gradient shape, so that the fatigue strength of the hub flange can be increased. However, the outer peripheral edge of the region in which the hardening is effected should lie at a position radially inwardly of the hub bolt mounting portion. Although a portion adjacent the hub bolt mounting portion, that is, the hub bolt mounting portion and its neighboring portion may be heat treated by the induction hardening process, in which case the induction tempering should be effected.

By allowing the surrounding of the hub bolt mounting portion to still remain green without being hardened or be in a condition having been tempered, serrations of the hub bolt can sufficiently cut into the hub axle, resulting in securement of the connectivity of the hub bolt, that is, the idle torque of the hub bolt that is higher than a predetermined value. By so doing, not only can the connectivity of the hub bolt be secured, but also the fatigue strength of the hub axle can be maintained and increased, resulting in attainment of the weight reduction.

In the wheel support bearing assembly according to the fifth aspect of the present invention, the hub flange of the hub axle may be constituted by a plurality of radially outwardly extending ribs each having a free end portion formed with the corresponding bolt insertion hole.

In general, since in the wheel support bearing assembly, the moment load transmitted from the automotive wheel tire acts on the root portions of the hub flange mainly in a direction axially thereof. Because of this, even though the hub flange of the hub axle is constituted by the radially outwardly extending ribs, a sufficient strength can be secured. As such, a further weight reduction can be attained advantageously.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal sectional view of a wheel support bearing assembly according to a first preferred embodiment of the present invention;
Fig. 2 is a side view of the wheel support bearing assembly, as viewed from an outboard side thereof;
Fig. 3 is a side view of the wheel support bearing assembly, showing an hub axle as viewed from an inboard side of the wheel support bearing assembly;
Figs. 4A and 4B are perspective views showing the wheel support bearing assembly as viewed from the outboard and inboard sides thereof, respectively;
Fig. 5 is a longitudinal sectional view of the wheel support bearing assembly according to a second preferred embodiment of the present invention;
Fig. 6 is a side view of the wheel support bearing assembly of Fig. 5 as viewed from the outboard side thereof;
Fig. 7A is a schematic longitudinal view of the wheel support bearing assembly according to a third preferred embodiment of the present invention;
Fig. 7B is a schematic side view, with portions removed away, of the wheel support bearing assembly of Fig. 7A as viewed from the inboard side thereof;
Fig. 8 is a longitudinal sectional view of the wheel support bearing assembly according to a fourth preferred embodiment of the present invention;
Fig. 9A is a side view of the wheel support bearing assembly of Fig. 8 as viewed from the outboard side thereof;
Fig. 9B is a cross-sectional view taken along the line IX-IX in Fig. 9A;
Fig. 10 is a longitudinal sectional view of the wheel support bearing assembly according to a fifth preferred embodiment of the present invention;
Fig. 11A is a side view of the wheel support bearing assembly of Fig. 10 as viewed from the outboard side thereof;
Fig. 11B is a cross-sectional view taken along the line XI-XI in Fig. 11A;
Fig. 12 is a longitudinal sectional view of the wheel support bearing assembly according to a sixth preferred embodiment of the present invention;
Fig. 13A is a side view of the wheel support bearing assembly of Fig. 12 as viewed from the outboard side thereof;
Fig. 13B is a cross-sectional view taken along the line XIII-XIII in Fig. 13A;
Fig. 14 is a fragmentary longitudinal sectional view; on an enlarged scale, showing a hub flange employed in the wheel support bearing assembly of Fig. 12;
Fig. 15 is a longitudinal sectional view of the wheel support bearing assembly according to a seventh preferred embodiment of the present invention;
Fig. 16A is a side view of the wheel support bearing assembly of Fig. 15 as viewed from the outboard side thereof;
Fig. 16B is a cross-sectional view taken along the line XVI-XVI in Fig. 16A;
Fig. 17 is a cross sectional taken along the line XVII-XVII in Fig. 18 illustrating the wheel support bearing assembly according to an eighth preferred embodiment of the present invention;
Fig. 18 is a side view of the wheel support bearing assembly of Fig. 17 as viewed from the outboard side thereof;
Fig. 19 is a longitudinal sectional view of the conventional wheel support bearing assembly;
Fig. 20 is a front elevational view of the conventional wheel support bearing assembly of Fig. 19;
Fig. 21A is a front elevational view of another conventional wheel support bearing assembly as viewed from the outboard side thereof; and
Fig. 21B is a cross-sectional view taken along the line XXI-XXI in Fig. 21A.

### DETAILED DESCRIPTION OF THE EMBODIMENTS

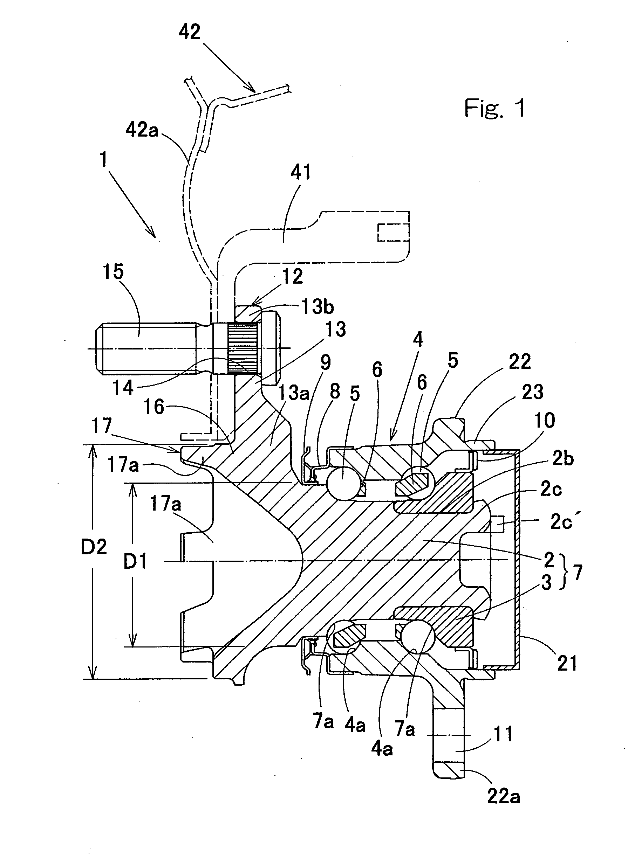

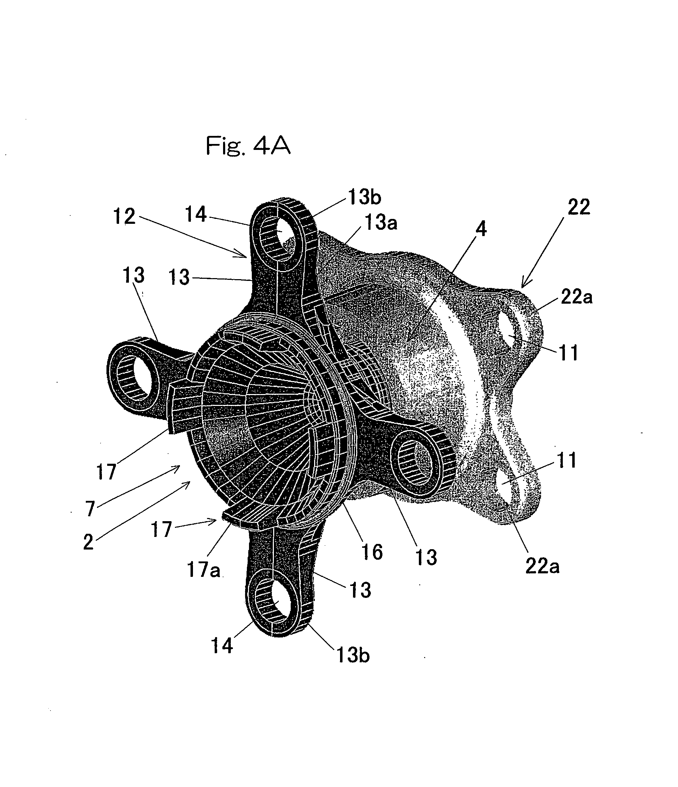

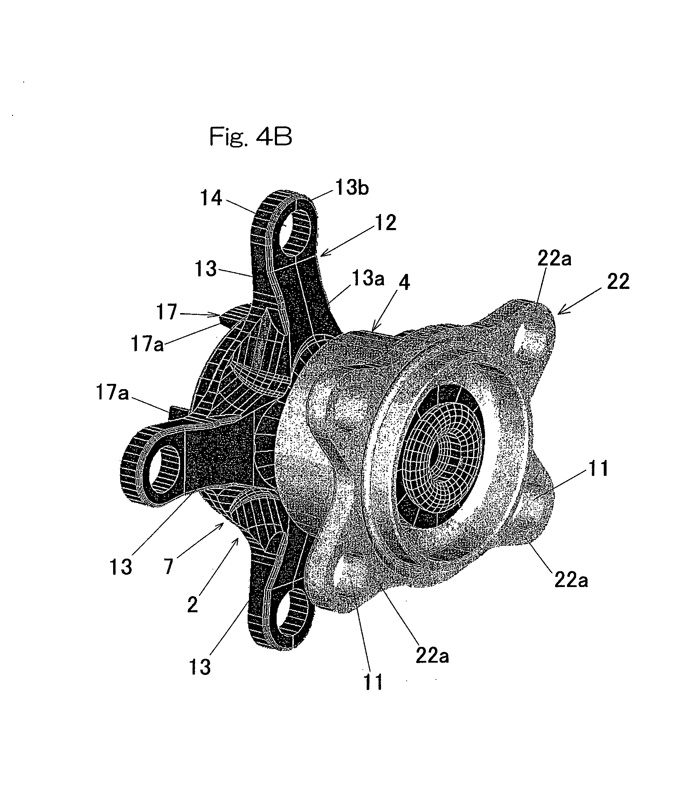

The wheel support bearing assembly according to a first preferred embodiment of the present invention is shown in Figs. 1 to 4. Referring to these figures, the wheel support bearing assembly shown generally by 1 may be eventually used as an automotive wheel support for rotatably supporting an automotive wheel, particularly an automotive driven wheel 42 in the form of a duel row angular ball bearing assembly. The illustrated wheel support bearing assembly 1 includes a generally cylindrical outer member 4 having a plurality of, for example, two, axially spaced and circumferentially extending annular outer raceway grooves (first raceways) 4a defined in an inner peripheral surface thereof, a generally cylindrical inner member 7 having axially spaced and circumferentially extending annular inner raceway grooves (second raceways) 7a defined in an outer peripheral surface thereof in alignment with the respective annular outer raceway grooves 4a and generally positioned radially inwardly of the outer member 4 with an annular bearing space delimited between it and the outer member 4, and circumferentially extending rows of rolling elements, for example, balls 5 operatively retained in position by a ball retainer or cage 6 in any known manner and accommodated within the annular bearing space while rollingly received in part within the outer and inner raceway grooves 4a and 7a, respectively. The inner member 7 has outboard and inboard ends opposite to each other and includes a wheel mounting hub flange 12 formed integrally, or otherwise rigidly connected, with the outboard end of the inner member 7 so as to extend radially outwardly therefrom, so that as will be specifically described later the automotive driven wheel may be bolted thereto for rotation together therewith.

The inner member 7 is made up of a generally cylindrical hub axle 2 having outboard and inboard ends opposite to each other with the wheel mounting hub flange 12 formed on the outboard end thereof as described above and having one of the inner raceway grooves 7a formed in an outer peripheral surface thereof at a location adjacent the hub flange 12, and an annular inner race segment 3 fixedly mounted on the inboard end thereof and having the other of the inner raceway grooves 7a formed in an outer peripheral surface of such inner race segment 3. Specifically, the inner race segment 3 is fixedly mounted on a radially inwardly depressed mounting portion 2b of the hub axle 2 adjacent the inboard end thereof, which portion 2b has a diameter reduced relative to that of the remaining portion of the hub axle 2. The inboard end of the hub axle 2 is, after the inner race segment 3 has been mounted on that radially inwardly depressed mounting portion 2b of the hub axle 2, staked radially outwardly to provide a flanged anchor 2c held in contact with an inboard annular end face of the inner race segment 3 to thereby fix the inner race segment 3 in an axial direction of the hub axle 2. As a matter of course, the flanged anchor 2c is formed by crimping or staking a cylindrical inboard end extremity, shown by the phantom line 2c' in Fig. 1 and extending axially outwardly from the radially inwardly depressed mounting portion 2b of the hub axle 2, so as to extend radially outwardly.

A contact type seal member 8 such as, for example, an oil seal for closing an outboard end of the annular bearing space between the inner member 7 and the outer member 4 in a fluid tight fashion is firmly mounted on the outboard end of the outer member 4. This contact type seal member 8 has one or more elastic sealing lips integrated together therewith in any known manner and those elastic sealing lips are slidingly held in contact with a generally L-sectioned sealing ring 9 fixedly mounted on a portion of the hub axle 2 between the hub flange 12 and the outboard inner raceway groove 7a. A generally ring-shaped magnetic encoder 10 forming a to-be-detected element of a rotary sensor for detecting the number of revolutions or revolutional velocity of the inner member 7 relative to the outer member 2 is mounted on an inboard end of the inner racer segment 3 forming a part of the inner member 7.

The opening at the inboard end of the outer member 4 is substantially completely closed by a sealing cap 21 having an axially extending flange tightly or fixedly received within such opening to thereby enclose the inboard end of the inner member 7 and the magnetic encoder 10 fluid tightly. The rotary sensor referred to above and cooperable with the magnetic encoder 10 is fitted to a portion of the sealing cap 21 which is aligned with the magnetic encoder 10.

It is, however, to be noted that the use of the sealing cap 21 may be dispensed with if so desired, in which case in place of the magnetic encoder 10 referred to above, a suitable sealing means (not shown) should be disposed for sealing an inboard open end of the annular bearing space between the outer member 4 and the inner member 7, particularly the inner race segment 3. This sealing means if so employed may include a slinger fitted to the inner member 7 and an elastic member fitted to the outer member 4 and having one or more elastic sealing lips slidingly engageable with the slinger on the inner member 7.

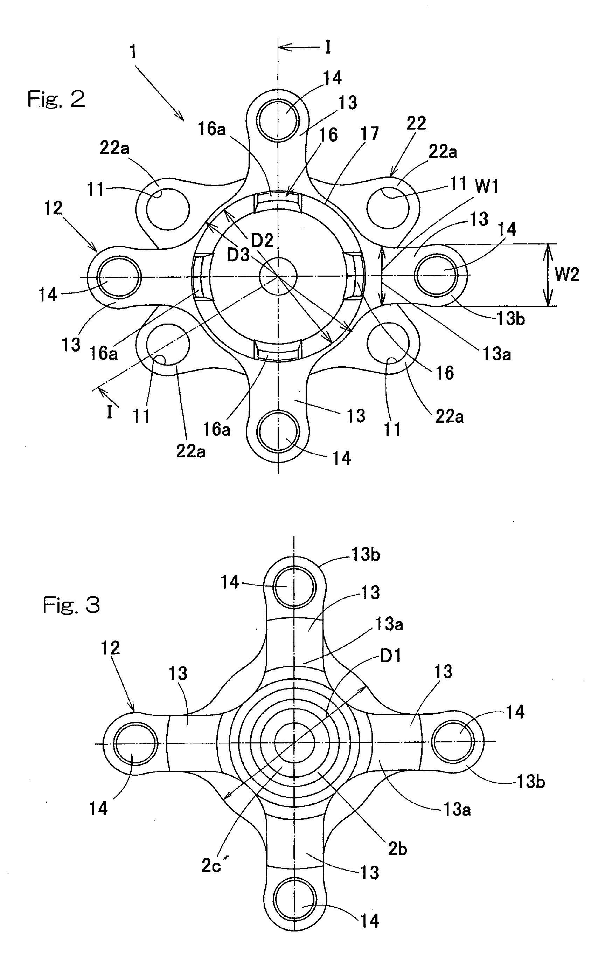

The outer member 4 has its outer peripheral surface provided with a radially outwardly extending flanged fixture 22. This fixture 22 has a plurality of bolt insertion holes 11 defined in an outer peripheral portion thereof and distributed in a direction circumferentially thereof. As shown in Fig. 2, this fixture 22 is of a design in which, as best shown in Fig. 2, an area of the flanged fixture except for portions thereof where the bolt insertion holes 11 are formed is depleted leaving those portions to extend radially outwardly. In other words, the flanged fixture 22 is divided into a plurality of, for example four flanges 22a spaced from each other in a direction circumferentially thereof. The flanged fixture 22 is, when in use, firmly coupled with a knuckle in the automotive wheel suspension system on a vehicle body structure by means of a corresponding number of knuckle bolts (not shown) passing through the bolt insertion holes 11 in the flanged fixture 22.

As best shown in Fig. 1, the outer member 4 includes a cylindrical knuckle pilot area 23 protruding outwardly away from the flanged fixture 22 in a direction towards the inboard side for tight engagement into an inner bore defined in the knuckle when the flanged fixture 22 is bolted to the knuckle in the manner described above. The knuckle bolts referred to above are firmly fastened to firmly connect the outer member 4 and, hence, the wheel support bearing assembly 1 with the knuckle while the cylindrical knuckle pilot area 23 has been tightly engaged into the inner bore of the knuckle. Also, although not shown, the rotary sensor is fitted to the sealing cap 21 at a location aligned with the magnetic encoder 10.

Referring still to Fig. 1, the hub flange 12 integral or rigid with the hub axle 2 has a plurality of bolt insertion holes 14 defined therein in circumferentially spaced relation to each other. One of the opposite surfaces of the hub flange 12, i.e., an outboard surface thereof on one side remote from the outer member 4 is, when the wheel support bearing assembly 1 is used to rotatably support the automotive driven wheel 42 (shown fragmentarily by the phantom line), held in contact with a wheel rim 42a of the automotive driven wheel 42 through a brake rotor 41 (shown by the phantom line) intervening between it and the wheel rim 42a. The brake rotor 41 and the automotive wheel 42 are secured to the hub flange 12 by means of the bolts 15 and corresponding hub nuts (not shown) fastened to such bolts 15 in a suitable manner well known to those skilled in the art. In the illustrated embodiment, the brake rotor 41 is in the form of a brake drum forming a part of the drum brake. It is, however, to be noted that the brake rotor 41 may be in the form of a brake disc forming a part of the disc brake.

The outboard end of the hub axle 2 is formed with a cylindrical brake pilot area 16 protruding axially outwardly therefrom in a direction counter to the outer member 4, that is, towards the outboard side, and also with a cylindrical wheel pilot area 17 protruding axially outwardly from the cylindrical brake pilot area 16. The brake pilot area 16 referred to above is utilized to guide an inner peripheral face of the brake rotor 41 when the latter is mounted onto the brake pilot area 16 with the wall of the brake rotor 41, whereas the wheel pilot area 17 referred to above is similarly utilized to guide an inner peripheral face of the automotive wheel 42 when the latter is mounted onto the wheel pilot area 16 in overlapped relation with the brake rotor 41. The brake pilot area 16 is formed as a cylindrical projection coaxial with the hub axle 2 and continued over the entire circumference thereof, i.e., having a continuous outer peripheral surface so that the outer peripheral surface thereof serving as a guide surface may represent a cylindrical surface. On the other hand, the wheel pilot area 17 is in the form of a cylindrical projection coaxially continued from the brake pilot area 16 and has an outer diameter somewhat smaller than that of the brake pilot area 16. This wheel pilot area 17 has a plurality of cutouts defined therein at respective locations circumferentially spaced from each other and is divided in the presence of the cutouts into a plurality of circumferentially spaced wheel pilot segments 17a each in the form of a projection.

As best shown in Fig. 3, the hub flange 12 integral or rigid with the hub axle 2 is of a design in which an area of the hub flange 12 except for an inner peripheral portion thereof is depleted leaving a plurality of rigid ribs or spider arms 13 each having a free end portion formed with the respective bolt insertion hole 14 referred to above. The hub flange 12 has an inboard root diameter D1 as measured on one of the opposite surfaces thereof, which is on the inboard side, and at respective roots of the spider arms 13, which root diameter D1 is chosen to be equal or smaller than the outer diameter D2 (Fig. 1) of the brake pilot area 16 discussed above, although in the illustrated embodiment, the inboard root diameter D1 at the respective roots of the spider arms 13 is chosen to be smaller than the outer diameter D2 of the brake pilot area 16. On the other hand, the outboard root diameter D3 of the hub flange 12 as measured on the other of the opposite surfaces thereof, which is on the outboard side, and at respective roots of the spider arms 13 as shown in Fig. 2, is chosen to be equal to or greater than the outer diameter D2 of the brake pilot area 16, although in the illustrated embodiment the outboard root diameter D3 at the respective roots of the spider arms 13 is chosen to be greater than the outer diameter D2 of the brake pilot area 16.

Each of the spider arms 13 is of a size in which the root width W1 thereof, that is, the width as measured of a root portion 13a of each spider arm 13 in a direction conforming to the direction of rotation of the inner member 7 relative to the outer member 2, is chosen to be equal to or smaller than the end width W2 of each spider arm 13, that is, the width as measured of a free end portion 13b of each spider arm 13 where the corresponding bolt insertion hole 14 is formed. Also, as shown in Fig. 1, the root portion 13a of each spider arm 13 is built up towards the inboard side to have a wall thickness, as measured in a direction axially of the hub axle 2, which is greater than the similarly measured wall thickness of the free end portion 13b thereof. More specifically, each of the spider arms 13 has a portion of the inboard surface thereof which is built up to protrude outwardly from the corresponding free end portion 13b thereof, that is, from a location adjacent a bolt head seat where the head of the corresponding bolt 15 is engaged, and is then radially inwardly inclined to the respective root portion 13a where that portion of the inboard surface of each spider arm 13 lies generally perpendicular to the longitudinal axis of the hub axle 2.

Hereinafter, material for each of the various component parts of the wheel support bearing assembly will be discussed. Each of the hub axle 2, the inner race segment 3 and the outer member 4 is made of bearing steel or carbon steel containing carbon in a quantity within the range of 0.4 to 0.8%. Each of the rolling elements 5 is also made of bearing steel. The raceway grooves 7a and the radially inwardly depressed mounting portion 2b in the hub axle 2 and the raceway grooves 4a in the outer member 4 have their surfaces hardened by the induction hardening process to a surface hardness within the range of 50 to 65 HRC. On the other hand, inner and outer peripheral surfaces and annular end faces of the inner race segment 3 are hardened or oil-quenched to a surface hardness within the range of 50 to 65 HRC. The rolling elements 5 are all oil-quenched.

Considering that the inner race segment 3 is fixed to the hub axle 2 by means of the flanged anchor 2c held in contact with the inboard annular end face of the inner race segment 3 as hereinbefore described, the strength and the rigidity both sufficient to withstand the moment load and the load brought about by a braking force generated by the automotive brake can be obtained assuredly. It is, however, to be noted that where the seal member 8 is held directly in sliding contact with the hub axle 2 without the sealing ring 9 being employed, at least a portion of the outer periphery of the hub axle 2 where the seal member 8 engages slidingly is preferably hardened to a surface hardness within the range of 50 to 65 HRC as is the case with that of the surfaces of the raceway groove 7a in the hub axle 7.

With the wheel support bearing assembly 1 so constructed as hereinbefore described, the hub flange 12 integral or rigid with the hub axle 2 includes the plural rigid ribs or spider arms 13 each having the respective bolt insertion hole 14 defined in the free end portion thereof. Accordingly, by eliminating that unnecessary portion of the wheel mounting hub flange 12 which will not adversely affect the strength of the wheel mounting hub flange 12, the weight reduction can be achieved in the wheel support bearing assembly 1. Also, since while the inner peripheral portion of the hub flange 12 is left in the form of a ring, at least the inboard root diameter D1 as defined above in each of the spider arms 13 is chosen to be equal to or smaller than the outer diameter D2 of the brake pilot area 16, the unnecessary portion could have been depleted considerably to achieve the further weight reduction of the wheel support bearing assembly 1.

Also, while the brake pilot area 16 continues over the entire circumference thereof, the wheel pilot area 17 continued axially from the brake pilot area 16 is tailored of a split design, further weight reduction is possible in the wheel support bearing assembly 1. The wheel pilot area 17 merely serves to guide the automotive wheel 42 during mounting of the automotive wheel 41 onto such wheel pilot area 17 and does not function to align the eventually mounted automotive wheel 42 or to minimize eccentricity thereof. Accordingly, even though the wheel pilot area 17 is of the split design, not of an entire circumference guide design, it will not pose any problem associated with the function thereof while allowing the wheel support bearing assembly 1 to be further reduced in weight.

While the hub flange 12 of the hub axle 2 is comprised of the plural spider arms 13, the brake pilot area 16 is of a design continued over the entire circumference thereof to provide an entire circumference guide design and, accordingly, the brake rotor 41 can easily be mounted onto the brake pilot area 16 with no eccentricity.

In other words, if the brake pilot area 16 were to be divided into a plurality of segments in a direction circumferentially thereof, a radial gap of the brake rotor 41 relative to the brake pilot area 16 would be uneven depending on the circumferential position and eccentricity would occur in mounting of the brake rotor 41, eventually resulting in braking vibration. Because of this, such division of the brake pilot area 16 will require the brake pilot area 16 to have a highly precisely machined outer peripheral surface. In particular, where the brake rotor 41 is in the form of a brake drum such as in the illustrated embodiment, there is a high possibility that foreign matter will enter inside the brake rotor 41 through the radial gap referred to above.

However, as described hereinabove, the brake pilot area 16 is continued over the entire circumference thereof, i.e., has a continuous outer peripheral surface, the risk of the brake rotor 41 being eccentrically mounted can advantageously be eliminated and the high precision machining is no longer necessary, resulting in reduction in manufacturing cost to achieve a low cost feature. In addition, any gap occurring between the inner peripheral surface of the brake rotor 41 and the hub axle 2 can advantageously be eliminated to allow no foreign matter such as gravels to enter into such gap. Hence, the use of any cover for protecting the foreign matter from entering into the gap is advantageously dispensed with, resulting in reduction in manufacturing cost.

The brake pilot area 16 is continued over the entire circumference thereof and the hub flange 12 is formed by the spider arms 13 with the inboard root diameter D1 chosen to be equal to or smaller than the outer diameter D2 of the brake pilot area 16 as hereinbefore described. However, since the outboard root diameter D3 as defined above is chosen to be equal to or greater than the outer diameter D2 of the brake pilot area 16, a continuity in shape can be obtained between the spider arms 13 and the brake pilot area 16, allowing even an automotive vehicle having a substantial weight to secure a sufficient strength. Accordingly, the weight reduction can advantageously be achieved while securement of the strength is ensured.

Also, since each of the ribs or spider arms 13 has the respective root portion 13a of the root width W1 chosen to be equal to or smaller than the end width W2 of the free end portion 13b thereof in which the corresponding bolt insertion hole 14 is defined, further weight reduction is possible while the necessary rigidity is preserved. In other words, it is preferred that the root portion 13a of each of the spider arms 13 has a thickness greater than the free end portion 13b thereof in view of strength. However, the free end portion 13b of each spider arm 13, which provides the bolt head seat, is required to have a width, as measured in the rotational direction, that is sufficient to allow the corresponding bolt insertion hole 14 to be formed therein. Accordingly, even though the root width W1 of the root portion 13a of each spider arm 13 is chosen to be smaller than the end width W2 of the free end portion 13b thereof, the root portion 13a of each spider arm 13 can have a necessary rigidity and a necessary strength, allowing further weight reduction to be achieved.

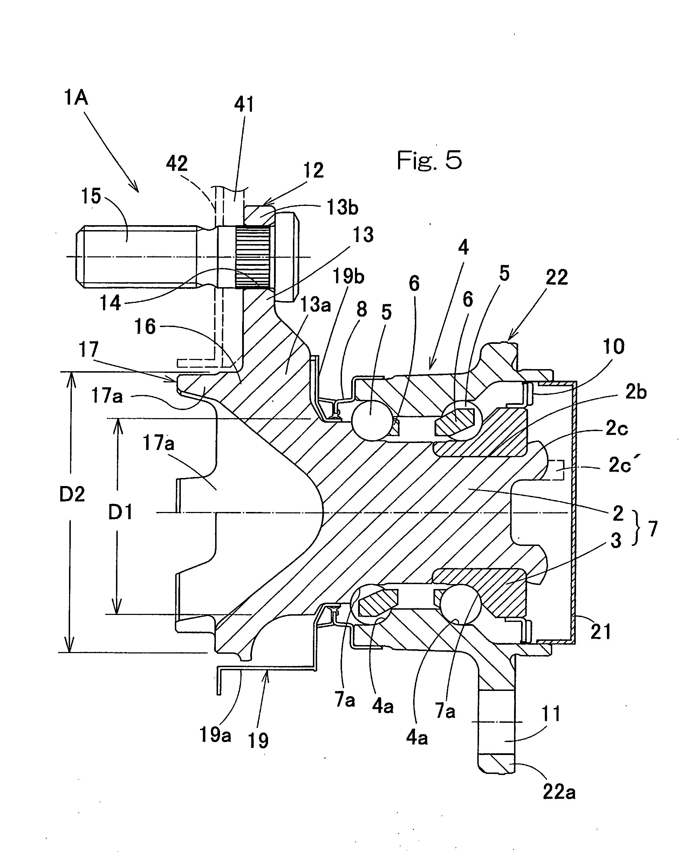

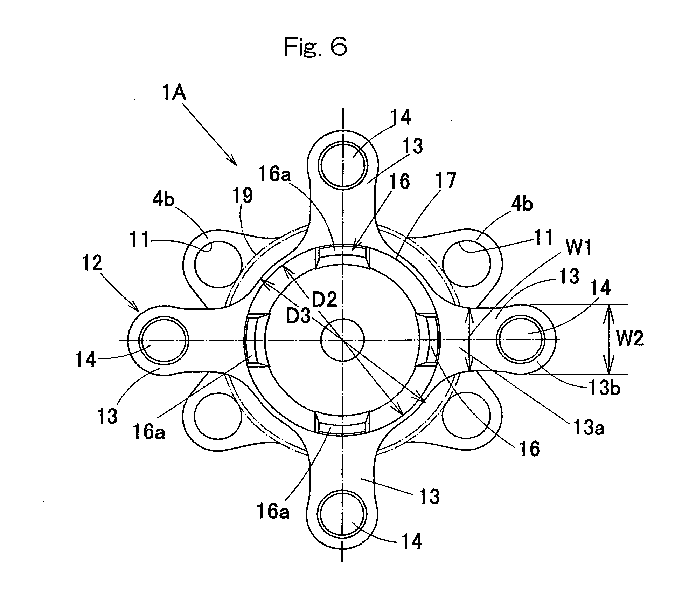

Figs. 5 and 6 illustrate a second preferred embodiment of the present invention. The wheel support bearing assembly, now generally identified by 1A, is similar to that according to the foregoing embodiment shown in Figs. 1 and 2, except that in place of the sealing ring 9 employed in the foregoing embodiment, a generally ring-shaped protective cover 19 is employed in the embodiment of Figs. 5 and 6. This protective cover 19 is generally cylindrical in shape and is of one-piece construction including a seal contact area 19a, fixedly mounted on a portion of the hub axle 2 between the hub flange 12 and the outboard inner raceway groove 7a, and a covering area 19b extending axially from the seal contact area 19a and covering a gap or depleted space in the hub flange 12 delimited between the neighboring rib or spider arms 13.

Other structural features of the wheel support bearing assembly 1A than those described above are similar to those of the wheel support bearing assembly 1 in the foregoing embodiment and, therefore, the details thereof will not be reiterated for the sake of brevity, noting that component parts shown in Figs. 5 and 6, but similar or identical to those shown in Figs. 1 and 2 are designated by like reference numerals employed in Figs. 1 and 2.

According to the second embodiment shown in Figs. 5 and 6, the protective cover 19 concurrently providing an area which the contact type seal member 8 engages slidingly is mounted on the hub axle 2 with the covering area 19b covering the gap or depleted space in the hub flange 12 delimited between the neighboring rib or spider arms 13. Accordingly, any undesirable ingress of water from the outboard side, i.e., from outside of the wheel support bearing assembly 1A can advantageously be avoided, which ingress would result in because of the unique shape of the hub flange 12 comprised of the plural ribs or spider arms 13. Also, since the protective cover 19 concurrently serves as the seal contact area with which the seal member 8 engages slidingly, the use of the protective cover 19 will not adversely affect the intended weight reduction.

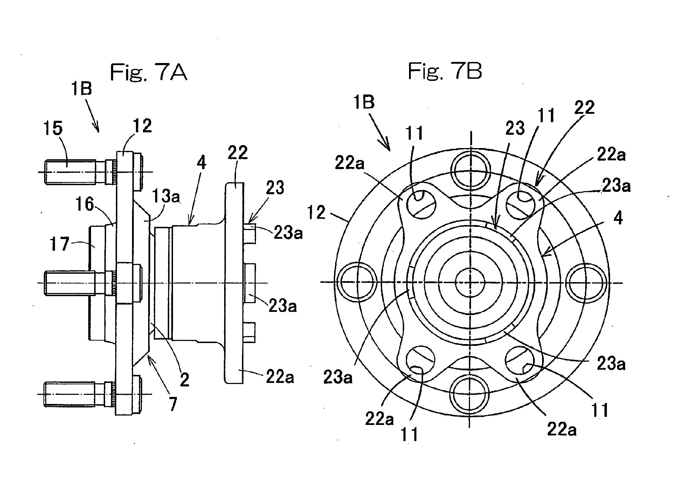

The wheel support bearing assembly 1B according to a third preferred embodiment of the present invention is shown in Figs. 7A and 7B. While Fig. 7B illustrates the wheel support bearing assembly 1B as viewed from the inboard side, the outer peripheral portion of the inner member 7 is not depicted for the sake of brevity.

The wheel support bearing assembly 1B shown in Figs. 7A and 7B is similar to the wheel support bearing assembly 1 shown in and described with reference to Figs. 1 and 2, except that in the wheel support bearing assembly 1B the cylindrical knuckle pilot area 23 is designed to be of a split type including a plurality of circumferentially spaced knuckle pilot segments 23a. The flanged fixture 22 integral with the outer member 4 and protruding radially outwardly therefrom is, as is the case with that employed in the first embodiment shown in and described with reference to Figs. 1 and 2 in connection with the first embodiment of the present invention, of a split type including the circumferentially spaced flanges 22a.

The knuckle pilot area 23 extends axially outwardly from an inboard surface of the flanged fixture 22 in a direction towards the inboard side and the knuckle pilot segments 23a are provided in not only circumferential portions aligned with the circumferential spaced flanges 22a, but also other portions than those circumferential portions and have respective bolt insertion holes 11 defined therein for passage of knuckle bolts (not shown) therethrough.

According to the third embodiment of the present invention shown in and described with reference to Figs. 7A and 7B, since the knuckle pilot area 23 is composed of the circumferentially spaced knuckle pilot segments 23a, the weight of the knuckle pilot area 23 is advantageously reduced to thereby achieve a further weight reduction of the wheel support bearing assembly 1B as a whole.

Other structural features of the wheel support bearing assembly 1B than those described above are similar to those of the wheel support bearing assembly 1 in the foregoing embodiment and, therefore, the details thereof will not be reiterated for the sake of brevity, noting that component parts shown in Figs. 7A and 7B, but similar or identical to those shown in Figs. 1 and 2 are designated by like reference numerals employed in Figs. 1 and 2.

It is to be noted that in the embodiment shown in and described with reference to Figs. 7A and 7B the knuckle pilot area 23 has been shown and described as circumferentially divided over the entire length thereof to provide the circumferentially spaced knuckle pilot segments 23a. However, the knuckle pilot area 23 may be circumferentially divided over a portion of the entire length thereof to provide the circumferentially spaced knuckle pilot segments 23a, leaving a circumferentially extending knuckle pilot base integral with the annular inboard end of the hub axle 2.

Also, the use of the circumferentially spaced knuckle pilot segments 23 formed by dividing the knuckle pilot area 23 in the manner described above with reference to Figs. 7A and 7B can be equally applied to the wheel support bearing assembly regardless of whether or not the wheel mounting hub flange 12 is of the split design, i.e., comprised of the ribs or spider arms 13, and/or whether any one of the brake pilot area 16 and the wheel pilot area 17 is similarly of the split design, i.e., comprised of the pilot segments.

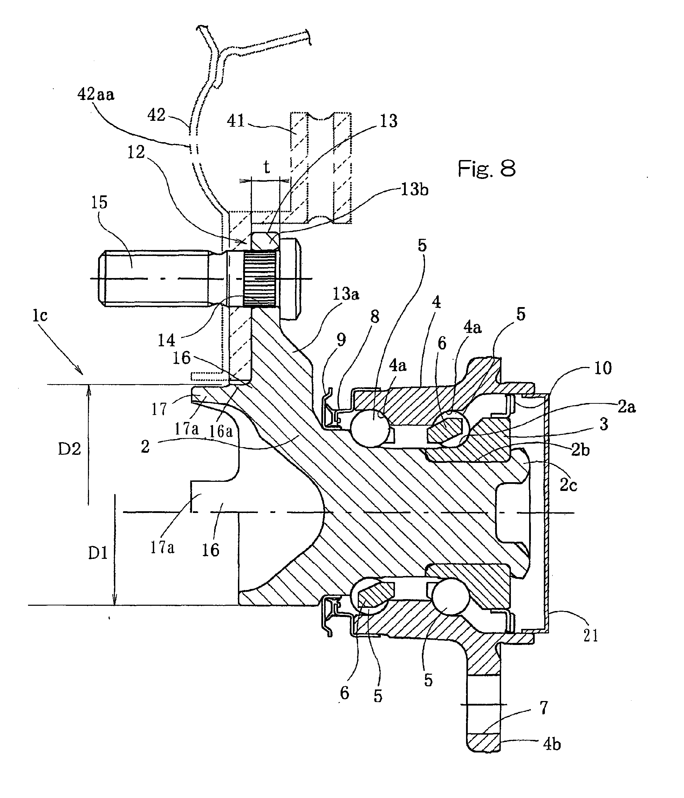

Figs. 8 to 9B illustrate the wheel support bearing assembly 1C according to a fourth preferred embodiment of the present invention. The wheel support bearing assembly 1C shown therein is similar to the wheel support bearing assembly 1 according to the first embodiment of the present invention, except that in this embodiment the brake pilot area 16 is formed with a plurality of circumferentially spaced cutouts, leaving a corresponding number of brake pilot segments 16a that are spaced from each other in a direction circumferentially thereof. The circumferentially spaced cutouts referred to above are formed so as to continue axially from the wheel pilot area 17 to the brake pilot area 16, with the circumferentially spaced wheel pilot segments 17a and the circumferentially spaced brake pilot segments 16a being consequently continued together in the form of respective single axial projections.

It is to be noted that division of the brake pilot area 16 to provide the brake pilot segments 16a may be made in the brake pilot area 16 over a fraction of the axial length thereof or over the entire axial length thereof, although in the illustrated embodiment of Figs. 8 to 9B the brake pilot area 16 is divided axially over the fraction of the length thereof so that the brake pilot segments 16a are connected together by means of a circumferentially extending brake pilot base that is integral with an inner peripheral portion of the hub flange 12 and, hence, the hub axle 2.

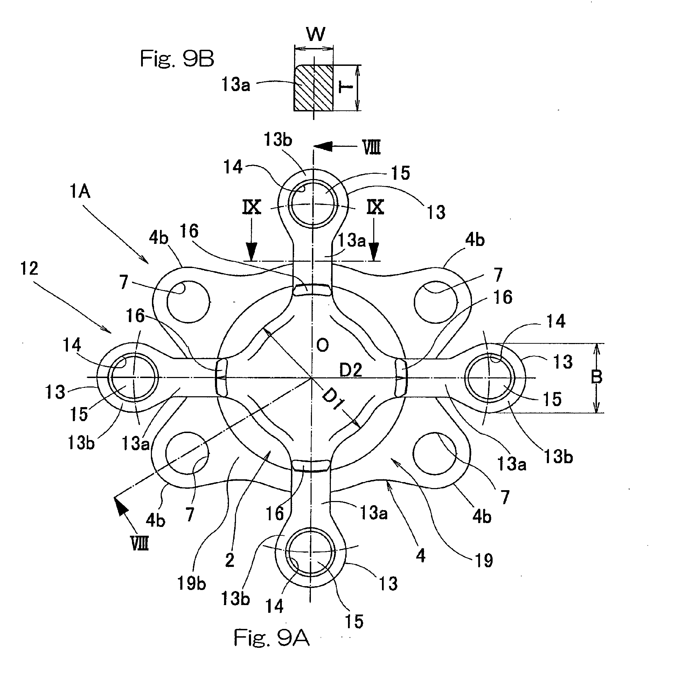

Also, in the embodiment of Figs. 8 to 9B, the root portion 13a of each of the ribs or spider arms 13a of the wheel mounting hub flange 12 is of a cross-sectional shape having the axial thickness T, as measured in a direction axially of the hub axle 2, of that root portion 13a chosen to be equal to or greater than the root width W1 thereof as measured in a direction conforming to the direction of rotation of the hub axle 2, as shown in Fig. 9B. The brake rotor 41 is in the form of a disc brake.

Other structural features of the wheel support bearing assembly 1C than those described above are similar to those of the wheel support bearing assembly 1 in the foregoing embodiment and, therefore, the details thereof will not be reiterated for the sake of brevity, noting that component parts shown in Figs. 8 to 9B, but similar or identical to those shown in Figs. 1 to 4 are designated by like reference numerals employed in Figs. 1 to 4.

According to the fourth embodiment, since the brake pilot area 16 is comprised of the brake pilot segments 16a that are spaced circumferentially from each other, still further weight reduction can be achieved.

Also, in the wheel support bearing assembly 1C, each of the rib or spider arms 13 is so shaped and so configured that the axial thickness T of the root portion 13a of each spider arm 13 is equal to or greater than the root width W thereof, as measured in the circumferential or rotational direction of the hub axle 2. Accordingly, the hub flange 12 can have a sufficient strength and a rigidity in the axial direction against the moment load imposed by the automotive wheel tire and acting mainly in a direction axially of the hub flange 12.

In other words, in the wheel support bearing assembly, since the moment load transmitted from the automotive wheel 42 acts on the root portions 13a of the hub flange 13 mainly in a direction axially thereof, the width W of each root portion 13a of the hub flange 12 may be of a value sufficient to withstand the load generated by the braking force. Because of this, selection of the axial thickness T to be equal to or greater than the width W of the root portion 13a of each rib or spider arm 13 in the hub flange 12 as measured in the cross-sectional shape in a direction conforming to the direction of rotation of the hub axle 2 is effective to minimize the cross-sectional surface area of each spider arm 13 and, at the same time, to secure sufficient strength and rigidity, eventually resulting in weight reduction. By way of example, as compared with that in the conventional wheel support bearing assembly shown in Fig. 21, the width W may be as small as 1/2 and, on the other hand, the axial thickness T may be increased to a value that is about 1.5 times that in the conventional wheel support bearing assembly. Accordingly, as compared with that in the conventional wheel support bearing assembly, the strength and the rigidity can advantageously be secured with a reduced sectional area.

In addition, in the practice of the fourth embodiment of the present invention, the root diameter D1 of each of the spider arms 13 of the hub flange 12 is chosen to be smaller than the diameter D2 of the brake pilot area 16 and, therefore, further weight reduction is again possible. Even though the root diameter D1 of each spider arm 13 is so chosen as described above, the result of infinite element analysis has revealed that selection of the axial thickness T of the root portion 13a of each spider arm 13 equal to or greater than the width W is effective to ensure the sufficient strength and rigidity.

It is to be noted that the wheel support bearing assembly 1C embodying the construction shown in and described with reference to Figs. 8 to 9B has been found having a weight that was reduced about 30% as compared with the conventional wheel support bearing assembly shown in Fig. 20 and utilizing the round flange and about 20% as compared with the conventional wheel support bearing assembly shown in Fig. 21 and employing ribs or spider arms each having a large cross-section in a direction confirming to the direction of rotation of the hub axle.

In addition, it has been described that the width W of the root portion 13a of each spider arm 13 of the hub flange 12 integral or rigid with the hub axle 2 is chosen to be smaller than the width B of the free end portion 13b of each spider arm 13 where the corresponding bolt insertion hole 14 is formed. However, formation of the bolt head seat in the free end portion 13b of each spider arm 13 and the corresponding bolt insertion hole 14 results in increase of the width and, therefore, selection of the width W of the root portion 13a of each spider arm 13 to be smaller than the width B that has been so increased is effective to achieve the further weight reduction and also to secure the strength and the rigidity. It is, however, to be noted that the axial thickness T of the free end portion 13b of each spider arm 13 as measured in a direction axially of the hub axle 2 may be either greater or smaller than the width W referred to above.

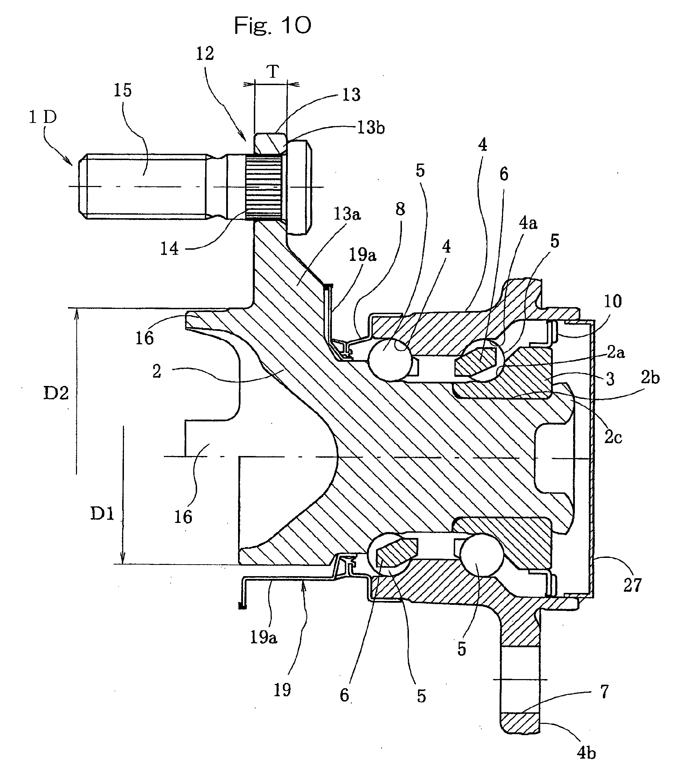

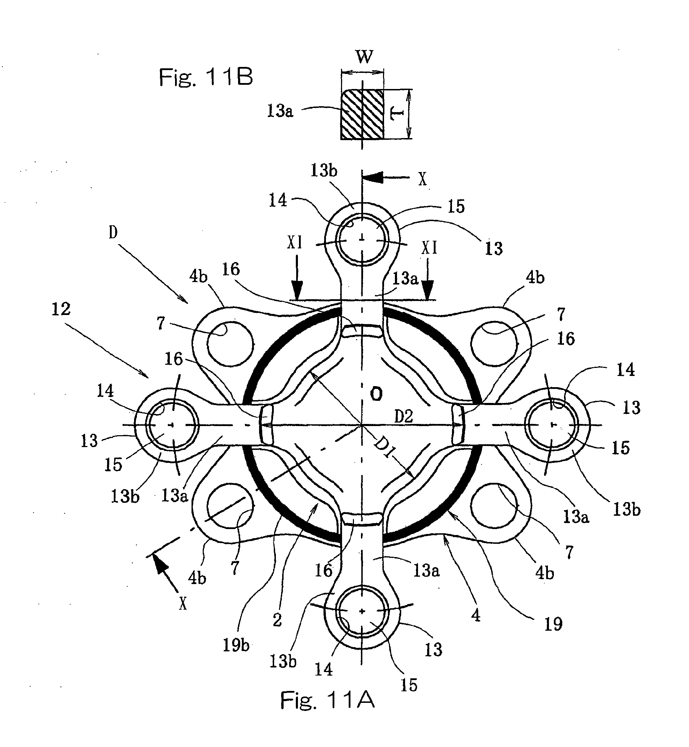

Referring now to Figs. 10 to 11B, there is shown the wheel support bearing assembly 1D according to a fifth preferred embodiment of the present invention. The wheel support bearing assembly 1D shown therein is similar to the wheel support bearing assembly according to the fourth embodiment shown in Figs. 8 to 9B, except that in the wheel support bearing assembly 1D a protective cover 19 is employed in place of the sealing ring 9. This protective cover 19 is generally cylindrical in shape and is of one-piece construction including a seal contact area 19a, fixedly mounted on a portion of the hub axle 2 between the hub flange 12 and the outboard inner raceway groove 7a, and a covering area 19b extending axially from the seal contact area 19a and covering a gap or depleted space in the hub flange 12 delimited between the neighboring rib or spider arms 13. The elastic sealing lips of the seal member 8 discussed hereinbefore and fixedly mounted on a portion of the hub axle 2 between the hub flange 12 and the outboard inner raceway groove 7a are slidingly engaged with the seal contact area 19a of the protective cover 19.

Even in this embodiment, as is the case with the fourth embodiment shown in and described with reference to Figs. 8 to 9B, the brake rotor 41 of the drum brake and the automotive wheel 42 (not shown in Fig. 10) are mounted on the wheel mounting hub flange 12 in overlapped relation to each other with the inner peripheral face of the brake rotor 41 guided by the brake pilot area 16.

Other structural features of the wheel support bearing assembly 1D are similar to those of the wheel support bearing assembly 1C in the fourth embodiment shown in Fig. 8.

According to the fifth embodiment, since the protective cover 19 concurrently serving as a slide contact area with which the seal member 8 engages slidingly is provided in the hub axle 2 so as to cover the gap or depleted space in the hub flange 12 delimited between the neighboring rib or spider arms 13, any undesirable ingress of water from the outboard side, i.e., from outside of the wheel support bearing assembly 1D can advantageously be avoided, which would result in because of the unique shape of the hub flange 12 comprised of the plural ribs or spider arms 13. Also, since the protective cover 19 concurrently serves as the seal contact area with which the seal member 8 engages slidingly, the use of the protective cover 19 will not adversely affect constitute an obstruction to the intended weight reduction.

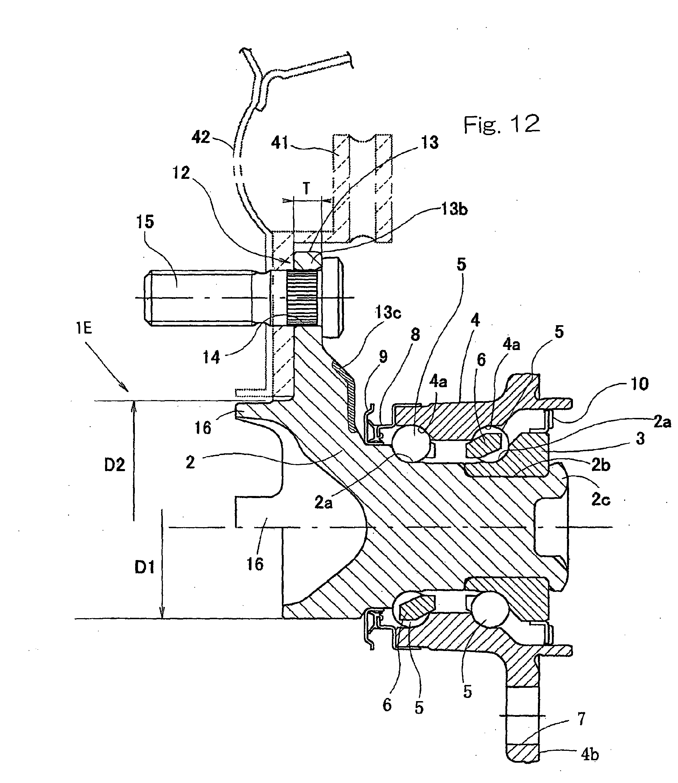

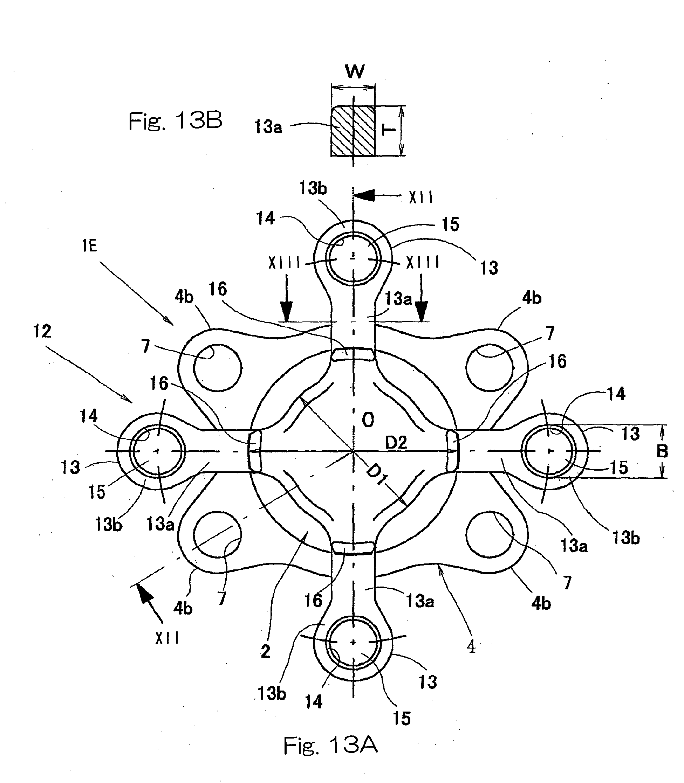

With reference to Figs. 12 to 14, the wheel support bearing assembly 1E according to a sixth preferred embodiment of the present invention will now be described. The wheel support bearing assembly 1E shown therein is similar to the wheel support bearing assembly 1C shown in and described with reference to Figs. 8 to 9B in connection with the fourth embodiment.

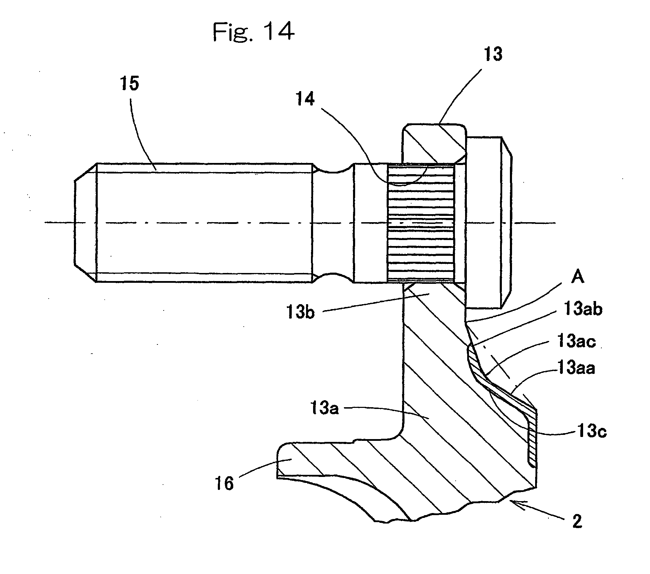

However, in the sixth embodiment, the longitudinal sectional shape from a thick walled base portion 13a in the hub flange 12 of the hub axle 2 to a hub bolt mounting portion 13b at an outer peripheral end thereof is so designed that as shown on an enlarged scale in Fig. 14, due to the gradient imparted to the inboard side face thereof, the wall thickness at an outer peripheral portion can be smaller than that at a center portion. More specifically, the gradient shape of the inboard side face is such as to include an gradient surface area 13aa adjacent the center and a gradient surface area 13ab adjacent the outer periphery that is inclined from the gradient surface area 13aa, both of which are connected together by means of an arcuate transit surface area 13ac of an arcuate sectional shape so as to represent a two-stage gradient shape.

Also, at least the connecting arcuate surface area 13ac referred to above, which lies on the inboard side surface of the thick walled base portion 13a, is heat treated by the induction hardening process to provide a hardened surface region 13c. More specifically, in the embodiment now under discussion, a surface region of the two-stage gradient shape ranging from the gradient surface area 13ab adjacent the outer periphery to the connecting arcuate surface area 13ac and then to the gradient surface area adjacent the center is formed as a hardened surface region 13c. An outer peripheral edge of the region in which the hardened surface region 13a is formed lies at a position radially inwardly of the hub bolt mounting portion 13b and, for example, at an intermediate position with respect to the radial direction of the gradient surface area 13ab adjacent the outer periphery. On the other hand, inner peripheral edge of the region in which the hardened surface region 13a is formed lies at a position around the thick walled base portion 13a. The hub bolt mounting portion 13b may be heat treated by the induction hardening process, in which case it should be subjected to an induction tempering. The hardened surface region 13c formed by the induction hardening process has a surface hardness equal to or higher than 58 HRC.

When the wheel support bearing assembly 1E is to be mounted on the automotive vehicle body structure with a flanged fixture 4b of the outer race 4 bolted to the knuckle, the hub axle 2 has to be rotated until the bolt insertion holes 7 defined in the flanged fixture 4b are aligned with the respective depleted spaces each between the neighboring ribs or spider arms 13, followed by making access of a fastening tool to the bolts in the flanged fixture 4b through the depleted spaces between the neighboring ribs or spider arms 13.

With the wheel support bearing assembly 1E according to the sixth embodiment, the longitudinal sectional shape of the region ranging from the thick walled base portion 13a of the hub flange 12 to the hub bolt mounting portion 13a adjacent the outer periphery thereof is so chosen that the inboard side face is inclined to render the wall thickness at an outer peripheral portion to be smaller than that at a center portion and the gradient shape of the inboard side face is such as to include the gradient surface area 13aa adjacent the center and the gradient surface area 13ab adjacent the outer periphery that is inclined at an angle smaller than that of inclination of the gradient surface area 13aa, both of which are connected together by means of an arcuate transit surface area 13ac of an arcuate sectional shape so as to represent a two-stage gradient shape. Accordingly, even though the wall thickness of the hub bolt mounting portion 13b is reduced, the wall thickness at the boundary A (See Fig. 14) between the thick walled base portion 12a and the hub bolt mounting portion 13b does not change abruptly and the stress concentration on that boundary A can advantageously be relieved. In view of this, the wall thickness of the hub bolt mounting portion 13b can advantageously be reduced.

By way of example, in the case of the conventional wheel support bearing assembly in which inclination of the thick walled base portion 13a represents a simple gradient shape as shown by the chin line in Fig. 14, the wall thickness at the boundary A changes abruptly and, accordingly, stress concentration on the boundary A tends to become considerable. Also, although the connecting arcuate surface area 13a provides the site at which stresses acting on the hub bolt mounting portion 13b can be dispersed, at least the connecting arcuate surface area 13ac in the inboard face of the hub flange 12 is heat treated by the induction hardening process to provide the hardened surface region 13c and, accordingly, the fatigue strength at this portion can be increased to increase the durability. Therefore, with the wheel support bearing assembly 1E of the structure described above with reference to Figs. 12 to 14, not only can the fatigue strength of the hub axle 2 be maintained and increased, but the weight reduction can also be achieved.

The outer peripheral edge of the region in which the hardened surface region 13c is formed by the induction hardening process lies at a position radially inwardly of the hub bolt mounting portion 13b and, since the surrounding of the hub bolt mounting portion 13b still remain green or is in a condition having been tempered and is therefore soft, serrations of the hub bolt 15 can sufficiently cut into the hub axle 2, resulting in securement of the connectivity of the hub bolt 15. In other words, the idle torque of the hub bolt 15 will increase, allowing it not to run idle.

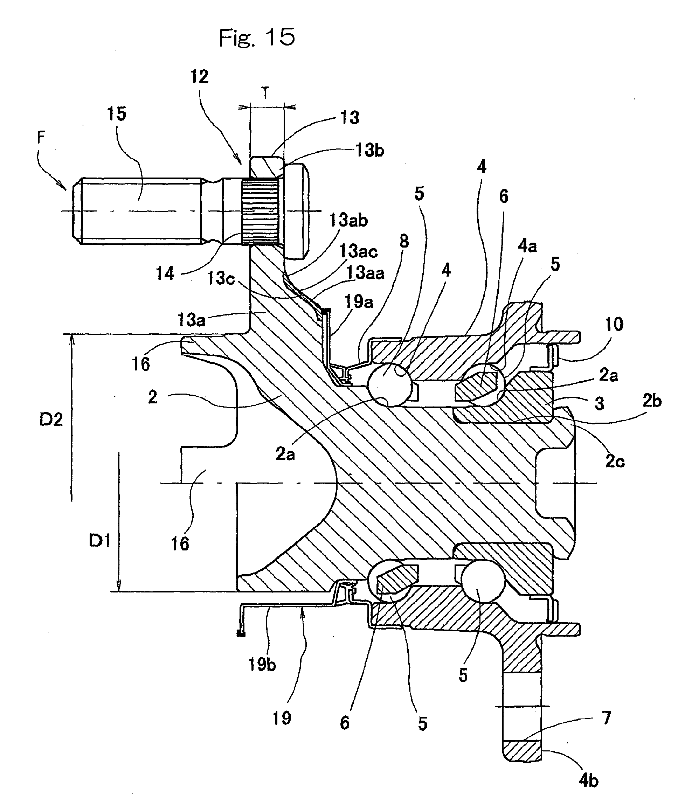

Figs. 15 to 16B illustrate the wheel support bearing assembly 1F according to a seventh preferred embodiment of the present invention. This wheel support bearing assembly 1F is similar to the wheel support bearing assembly 1E shown in and described with reference to Figs. 12 to 14 in connection with the sixth embodiment, except that in place of the seal ring 9 employed in the wheel support bearing assembly 1E, a protective cover 19 is employed in the wheel support bearing assembly 1F. This protective cover 19 is generally cylindrical in shape and is of one-piece construction including a seal contact area 19a, fixedly mounted on a portion of the hub axle 2 between the hub flange 12 and the outboard inner raceway groove 2a, and a covering area 19b extending axially from the seal contact area 19a and covering a gap or depleted space in the hub flange 12 delimited between the neighboring rib or spider arms 13. The elastic sealing lips of the seal member 8 discussed hereinbefore and fixedly mounted on a portion of the hub axle 2 between the hub flange 12 and the outboard inner raceway groove 2a in the outer race 4 are slidingly engaged with the seal contact area 19a of the protective cover 19.

Even in this embodiment, as is the case with the sixth embodiment shown in and described with reference to Figs. 12 to 14, the brake rotor 41 of the drum brake and the automotive wheel 42 (not shown in Fig. 14) are mounted on the wheel mounting hub flange 12 in overlapped relation to each other with the inner peripheral face of the brake rotor 41 guided by the brake pilot area 16.

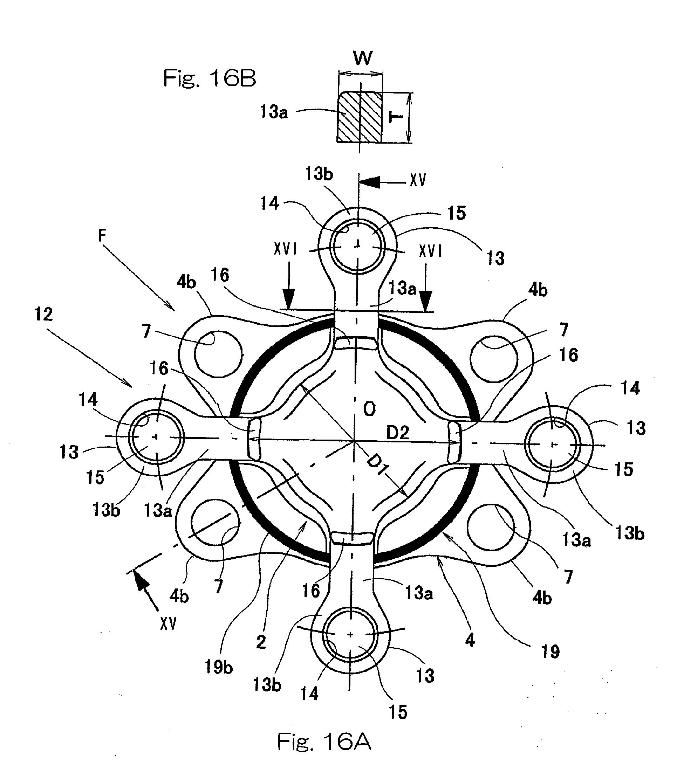

Other structural features of the wheel support bearing assembly 1F than those described above are similar to those of the wheel support bearing assembly 1E in the foregoing embodiment shown in and described with reference to Figs. 12 to 14 and, therefore, the details thereof will not be reiterated for the sake of brevity, noting that component parts shown in Figs. 15 and 16B, but similar or identical to those shown in Figs. 12 to 14 are designated by like reference numerals employed in Figs. 12 to 14.

According to the seventh embodiment described above, since the protective cover 19 concurrently serving as a slide contact area with which the seal member 8 engages slidingly is provided in the hub axle 2 so as to cover the gap or depleted space in the hub flange 12 delimited between the neighboring rib or spider arms 13, any undesirable ingress of water from the outboard side, i.e., from outside of the wheel support bearing assembly 1F can advantageously be avoided, which would result in because of the unique shape of the hub flange 12 comprised of the plural ribs or spider arms 13. Also, since the protective cover 19 concurrently serves as the seal contact area with which the seal member 8 engages slidingly, the use of the protective cover 19 will not adversely affect the intended weight reduction.

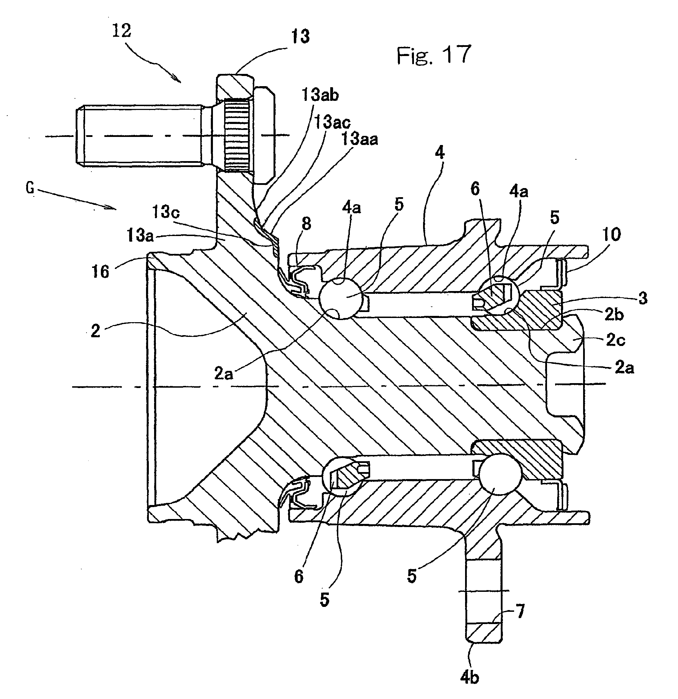

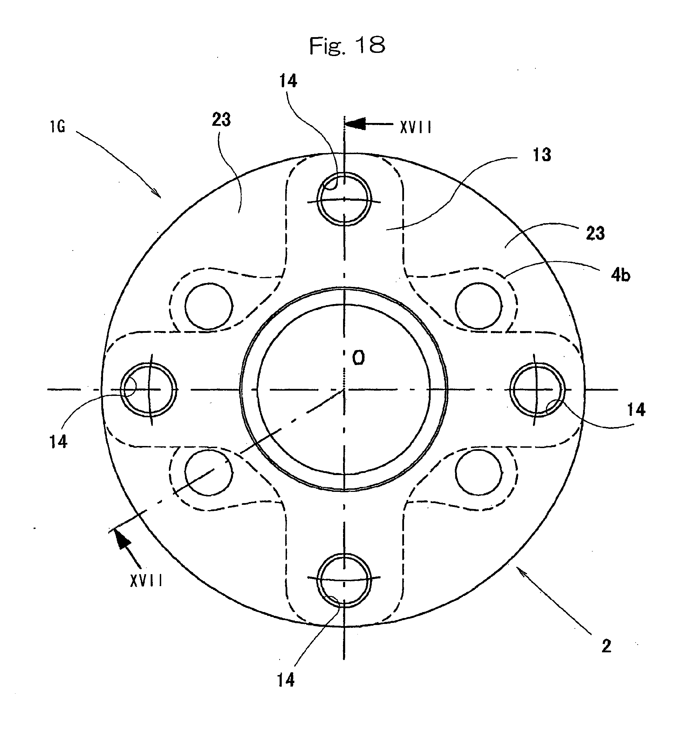

An eighth preferred embodiment of the present invention is shown in Figs. 17 and 18. The wheel support bearing assembly 1G shown therein is similar to the wheel support bearing assembly 1F shown in and described with reference to Figs. 12 to 14 in connection with the sixth embodiment, except that in this embodiment of Figs. 17 and 18, the hub flange 12 of the hub axle 2 is of a substantially round shape as best shown in Fig. 18, but only portions of the hub flange 12 around the bolt insertion holes 14 are formed as respective thick walled ribs 13 while the remaining portion thereof is left as a non-ribbed thin wall portion 23 to thereby achieve the weight reduction.

Other structural features of the wheel support bearing assembly 1G than those described above, including the longitudinal sectional shape of each thick walled ribs 13 and formation of the hardened surface region 13c by the use of the induction hardening process, are similar to those of and in the wheel support bearing assembly 1E in the sixth embodiment shown in and described with reference to Figs. 12 to 14 and, therefore, the details thereof will not be reiterated for the sake of brevity, noting that component parts shown in Figs. 17 and 18, but similar or identical to those shown in Figs. 12 to 14 are designated by like reference numerals employed in Figs. 17 and 18.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. For example, while in describing any one of the foregoing embodiments the present invention has been described as applied to the wheel support bearing assembly for the support of the automotive driven wheel, the present invention can be equally applied to the wheel support bearing assembly for the support of an automotive drive wheel.

Also, while in any one of the foregoing embodiments, the rolling elements 5 have been described as employed in the form of balls, the present invention can be equally applied even where tapered rollers are employed for the rolling elements.

Accordingly, such changes and modifications are, unless they depart from the scope of the present invention as delivered from the claims annexed hereto, to be construed as included therein.

## Claims

1. A wheel support bearing assembly for rotatably supporting a vehicle wheel relative to a vehicle body structure, said wheel support bearing assembly comprising:
an outer member having an inner peripheral surface formed with a plurality of first raceways;
an inner member positioned radially inwardly of the outer member, and having an outer peripheral surface formed with a corresponding number of second raceways defined therein in alignment with the first raceways in the outer member, said inner member also having inboard and outboard end portions opposite to each other and a wheel mounting hub flange formed in the outboard end portion so as to extend radially outwardly therefrom; and
rows of rolling elements rollingly accommodated within the annular bearing space and received in part within the first raceways and in part within the second raceways;
wherein said wheel mounting hub flange has an inner peripheral wall portion and a remaining wall portion other than the inner peripheral portion, said remaining wall portion being constituted by a plurality of radially outwardly extending ribs, each of said ribs being formed with a bolt insertion hole defined therein and having inboard and outboard surfaces opposite to each other; and
wherein said inner member has a brake pilot area extending in an outboard direction from the hub flange for guiding an inner peripheral surface of a brake rotor adapted to be secured to the hub flange, a root diameter of each of the ribs as measured at the inboard surface thereof being chosen to be equal to or smaller than an outer diameter of the brake pilot area.

2. The wheel support bearing assembly as claimed in Claim 1, wherein the inner member comprises a hub axle having the wheel mounting flange formed on the outboard end portion of the hub axle so as to extend radially outwardly from an outer peripheral surface thereof, and an inner race segment fixedly mounted on the inboard end portion of the hub axle, and wherein said second raceways are formed in the hub axle and the inner race segment, respectively, and said hub axle has the brake pilot area defined therein.

3. The wheel support bearing assembly as claimed in Claim 1, wherein the brake pilot area is continued over an entire circumference thereof and a root diameter of each of the ribs as measured at the outboard surface thereof being chosen to be equal to or greater than the outer diameter of the brake pilot area.

4. The wheel support bearing assembly as claimed in Claim 1, wherein the inner member also has a wheel pilot area extending outwardly from the brake pilot area in an outboard direction for guiding an inner peripheral surface of the automotive wheel, wherein the brake pilot area is in the form of a ring continued over an entire circumference thereof and the wheel pilot area is divided into a plurality of circumferentially spaced wheel pilot segments.

5. The wheel support bearing assembly as claimed in Claim 1, wherein a width of a root portion of each of the ribs of the hub flange as measured in a direction conforming to a direction of rotation of the inner member is chosen to be equal to or smaller than a width of an end portion of each of the ribs, where the corresponding bolt insertion hole is formed, as measured in a direction conforming to the direction of rotation of the inner member.

6. The wheel support bearing assembly as claimed in Claim 1, further comprising a protective cover including a seal contact area, mounted on a portion of an hub axle between the hub flange on the hub axle and the second raceway, and a covering area extending from the seal contact area and covering a depleted space delimited between the neighboring ribs, and a contact type seal member mounted on the outer member and having at least one elastic sealing lip slidingly engaged with the protective cover.

7. The wheel support bearing assembly as claimed in Claim 1, wherein the brake rotor comprises a brake drum of a drum brake.

8. A wheel support bearing assembly for rotatably supporting a vehicle wheel relative to a vehicle body structure, said wheel support bearing assembly comprising:
an outer member having an inner peripheral surface formed with a plurality of first raceways;
an inner member including a hub axle having outboard and inboard end portions opposite to each other and also having a wheel mounting flange formed on the outboard end portion thereof so as to extend radially outwardly from an outer peripheral surface thereof and an inner race segment fixedly mounted on the inboard end portion of the hub axle, said inner member being positioned radially inwardly of the outer member, and also having an outer peripheral surface formed with a corresponding number of second raceways defined therein in alignment with the first raceways in the outer member; and
rows of rolling elements rollingly accommodated within the annular bearing space and received in part within the first raceways and in part within the second raceways;
wherein the hub axle has a brake pilot area extending in an outboard direction from the hub flange for guiding an inner peripheral surface of a brake rotor adapted to be secured to the hub flange and a wheel pilot area extending further outwardly from the brake pilot area in an outboard direction for guiding an inner peripheral surface of the automotive wheel, at least said wheel pilot area being divided into a plurality of circumferentially spaced wheel pilot segments.

9. The wheel support bearing assembly as claimed in Claim 8, wherein the brake pilot area is in the form of a ring continued over an entire circumference thereof.

10. The wheel support bearing assembly as claimed in Claim 8, wherein the wheel mounting hub flange has an inner peripheral wall portion and a remaining wall portion other than the inner peripheral portion, said remaining wall portion being constituted by a plurality of radially outwardly extending ribs, each of said ribs being formed with a bolt insertion hole defined therein.

11. The wheel support bearing assembly as claimed in Claim 8, wherein a width of a root portion of each of the ribs of the hub flange as measured in a direction conforming to a direction of rotation of the inner member is chosen to be equal to or smaller than a width of an end portion of each of the ribs, where the corresponding bolt insertion hole is formed, as measured in a direction conforming to the direction of rotation of the inner member.

12. The wheel support bearing assembly as claimed in Claim 8, further comprising a protective cover including a seal contact area, mounted on a portion of an hub axle between the hub flange on the hub axle and the second raceway, and a covering area extending from the seal contact area and covering a depleted space delimited between the neighboring ribs, and a contact type seal member mounted on the outer member and having at least one elastic sealing lip slidingly engaged with the protective cover.

13. The wheel support bearing assembly as claimed in Claim 8, wherein the brake rotor comprises a brake drum of a drum brake.

14. The wheel support bearing assembly as claimed in Claim 8, wherein the outer member has inboard and outboard end portions opposite to each other and, also, its outer peripheral surface formed with a fixing flange, the inboard end portion of the outer member including a knuckle pilot is engageable with an inner peripheral surface of a knuckle, said knuckle pilot area being divided into a plurality of circumferentially spaced knuckle pilot segments.

15. A wheel support bearing assembly for rotatably supporting a vehicle wheel relative to a vehicle body structure, said wheel support bearing assembly comprising:
an outer member having an inner peripheral surface formed with a plurality of first raceways;
an inner member positioned radially inwardly of the outer member, and having an outer peripheral surface formed with a corresponding number of second raceways defined therein in alignment with the first raceways in the outer member, said inner member also having inboard and outboard end portions opposite to each other and a first flange for supporting the automotive wheel, said first flange being formed in the outboard end portion so as to extend radially outwardly therefrom; and
rows of rolling elements rollingly accommodated within the annular bearing space and received in part within the first raceways and in part within the second raceways;
wherein the outer member includes a second flange formed on an outer peripheral surface thereof and has its inboard end portion including a knuckle pilot area engageable with an inner peripheral surface of a knuckle, said knuckle pilot area being divided into a plurality of circumferentially spaced knuckle pilot segments.

16. A wheel support bearing assembly for rotatably supporting a vehicle wheel relative to a vehicle body structure, said wheel support bearing assembly comprising:
an outer member having an inner peripheral surface formed with a plurality of first raceways;
an inner member including a hub axle having outboard and inboard end portions opposite to each other and also having a wheel mounting flange formed on the outboard end portion thereof so as to extend radially outwardly from an outer peripheral surface thereof and an inner race segment fixedly mounted on the inboard end portion of the hub axle, said inner member being positioned radially inwardly of the outer member, and also having an outer peripheral surface formed with a corresponding number of second raceways defined therein in alignment with the first raceways in the outer member; and
rows of rolling elements rollingly accommodated within the annular bearing space and received in part within the first raceways and in part within the second raceways;
wherein the hub flange is constituted by a plurality of radially outwardly extending ribs, each of said ribs being formed with a bolt insertion hole defined therein and having inboard and outboard surfaces opposite to each other and
wherein a root thickness of a root portion of each of the ribs of the hub flange as measured in a direction axially of the inner member is chosen to be equal to or greater than a width of the root portion of each rib as measured in a direction conforming to a direction of rotation of the inner member.

17. The wheel support bearing assembly as claimed in Claim 16, wherein the width of the root portion of each of the ribs of the hub flange as measured in a direction conforming to the direction of rotation of the inner member is chosen to be smaller than a width of a portion of each of the ribs where the corresponding bolt insertion hole is formed, as measured in that direction conforming to the direction of rotation of the inner member.

18. The wheel support bearing assembly as claimed in Claim 16, further comprising a protective cover including a seal contact area, mounted on a portion of an hub axle between the hub flange on the hub axle and the second raceway, and a covering area extending from the seal contact area and covering a depleted space delimited between the neighboring ribs, and a contact type seal member mounted on the outer member and having at least one elastic sealing lip slidingly engaged with the protective cover.

19. A wheel support bearing assembly for rotatably supporting a vehicle wheel relative to a vehicle body structure, said wheel support bearing assembly comprising:
an outer member having an inner peripheral surface formed with a plurality of first raceways;
an inner member including a hub axle having outboard and inboard end portions opposite to each other and also having a wheel mounting flange formed on the outboard end portion thereof so as to extend radially outwardly from an outer peripheral surface thereof and an inner race segment fixedly mounted on the inboard end portion of the hub axle, said inner member being positioned radially inwardly of the outer member, and also having an outer peripheral surface formed with a corresponding number of second raceways defined therein in alignment with the first raceways in the outer member; and
rows of rolling elements rollingly accommodated within the annular bearing space and received in part within the first raceways and in part within the second raceways;
wherein a longitudinal sectional shape of a region ranging from a thick walled base portion of the hub flange to a hub bolt mounting portion adjacent an outer periphery of the hub axle is so chosen that an inboard side face is inclined to render a wall thickness at an outer peripheral portion to be smaller than that at a center portion and a gradient shape of the inboard side face is in a form of a two-stage gradient shape made up of a first gradient surface area adjacent the center and a second gradient surface area adjacent the outer periphery, that is inclined at an angle smaller than that of inclination of the first gradient surface area, which is connected with the first gradient surface area by means of a connecting arcuate transit surface area, and wherein the connecting transit arcuate surface area in the inboard side surface is a surface which has been hardened by an induction hardening process.

20. The wheel support bearing assembly as claimed in Claim 19, wherein an outer peripheral edge of the region in which the surface areas to be heat treated to provide the hardened surface lies at a position radially inwardly of the hub bolt mounting portion.

21. The wheel support bearing assembly as claimed in Claim 19, wherein the hub flange of the hub axle is constituted by a plurality of radially outwardly extending ribs each having a free end portion formed with the corresponding bolt insertion hole.
